# EUROPEAN PATENT SPECIFICATION

(11) **EP 2 773 822 B1**
(45) Date of publication and mention of the grant of the patent: **25.11.2020**
(21) Application number: 12846773.5
(22) Date of filing: 31.10.2012
(51) Int. Cl.: E04D 15/04, B25B 23/04, B25B 23/06, B25B 31/00, E04D 3/362, B25C 5/16, F16B 27/00

(54) **MOUNTING OF ROOF CLIPS**
MONTAGE VON DACHKLAMMERN
MONTAGE DE CLIPS POUR TOITURE

(30) Priority: 31.10.2011 SE 1151012
(43) Date of publication of application: 10.09.2014
(73) Proprietor: Lindab Profil AB, 269 82 Båstad (SE)
(72) Inventor: SVANBERG, Bjarne, S-151 38 Södertälje (SE); ÅSBERG, Göran, S-151 02 Södertälje (SE)
(74) Representative: Zacco Sweden AB
(86) International application number: PCT/SE2012/051182
(87) International publication number: WO 2013/066255

(56) References cited:
- EP-A1- 0 003 004
- EP-A1- 0 487 482
- EP-A1- 0 927 797
- EP-A1- 0 927 797
- CH-A5- 694 737
- DE-A1- 3 718 505
- US-A- 3 930 297
- US-A- 3 930 297
- US-A- 5 947 362
- US-B1- 6 478 209

## Description

### Field of the invention

The present invention relates to a portable roof clip mounting tool for fitting roof mounting clips to a support structure. The invention also relates to a use of a strip-shaped roof mounting clip magazine.

### Background of the invention

The roof of a building is often more exposed to weather and wind than other parts of a building. This puts high demands on tightness, durability and strength of a roof. Therefore, the construction of a roof is a delicate matter, often requiring special competence of the construction worker, as well as special mounting components and construction materials. Typically, roof panels are attached to a support structure using special mounting clips, which may be nailed to the support structure. EP0113753 discloses a mounting clip for holding a metal roof panel seam to a support structure. A portable mounting tool is furthermore known from US 6478209 B1.

There is a constant need for improving the safety of construction workers, in particular of those working on roofs.

### Summary of the invention

It is an object of the present invention to solve, or at least mitigate, parts or all of the above mentioned problems. To this end, there is provided a portable roof clip mounting tool, according to claim 1, for fitting roof mounting clips to a roof support structure, the portable roof clip mounting tool comprising a magazine forwarding mechanism for feeding a strip-shaped roof mounting clip magazine to a fastening tool for driving fasteners into the roof support structure. Such a tool does not require holding the roof mounting clip with one hand while attaching it; thereby, one hand of the construction worker may be freed, at least during part of the attaching operation. The usefulness of a free hand is generally significant when laying a roof, as there may be a need to keep the balance or hold on to something in order not to fall down. Furthermore, automatic forwarding of roof mounting clips to the fastening tool facilitates the mounting of roof panels and renders the work more efficient.

According to the invention, the roof clip mounting tool further comprises a magazine guide for guiding said magazine to the fastening tool.

According to the invention, the magazine forwarding mechanism of the roof clip mounting tool comprises a sled, movable along said magazine guide between a retracted position and an advanced position, and biased to said advanced position, said sled being provided with a dog configured to engage with and advance said roof mounting clip magazine in a forward direction when the sled moves from the retracted position to the advanced position, and to non-engagingly pass the roof mounting clip magazine when the sled moves from the advanced position to the retracted position; and a fastening tool holder, said fastening tool holder being reciprocatable relative to the magazine guide along a fastening tool guide between a raised position and a lowered position, said fastening tool holder being coupled to the sled so as to move the sled from the advanced position to the retracted position when the fastening tool holder is moved from the raised position to the lowered position. Such a forwarding mechanism provides a light, reliable and structurally simple feeding of the magazine. Few moving parts result in a low level of friction within the mounting tool.

According to an embodiment, the magazine guide is configured for guiding the magazine from a magazine guide entry to a magazine guide exit. Thereby, loading may be sequential, i.e. magazines may be fed sequentially into the guide at the guide entry, such that the feeding apparatus may be continuously fed with magazines. Furthermore, such a design makes the roof clip mounting tool easy to load, since a strip-shaped roof mounting clip magazine may simply be slid into the magazine guide entry, and may be automatically gripped by the dog and fed by the sled, as the case may be. According to an embodiment, the magazine forwarding mechanism is configured to allow the magazine to be freely pressed right through the feeding apparatus in the direction from the magazine guide entry to the magazine guide exit. The absence of a forwarding stop makes the forwarding mechanism simpler, lighter, and more reliable.

According to an embodiment, the fastening tool holder is coupled to the magazine guide in a manner allowing the sled to remain in retracted position when the fastening tool holder is moved from the lowered position to the raised position. By allowing the sled to return to the advanced position only by means of the sled bias, in an otherwise unconstrained, unforced manner, there is no need for an arrangement for synchronizing the advancing of the roof mounting clip magazine with the raising of the fastening tool holder; the sled will be advanced as soon as the magazine is free to move along the magazine guide. This allows for a simple and reliable forwarding mechanism which is not prone to jamming due to e.g. synchronization problems. According to an embodiment, the fastening tool holder is coupled to and arranged to move the sled by means of a wedge arrangement.

According to an embodiment, the roof clip mounting tool is configured to, when the fastening tool holder is moved from its raised position to its lowered position and thereby moving the sled from the advanced position to the retracted position, push a portion of the fastening tool or of the fastening tool holder into the magazine, such that said portion prevents the magazine from sliding in a reverse direction, said reverse direction being opposite to said forward direction. Thereby, no separate back-stop arrangement for the magazine is needed; said portion of the fastening tool or the fastening tool holder will act as a back-stop, preventing the magazine from following the sled to the retracted position.

According to an embodiment, the fastening tool holder is biased to the raised position. This makes the tool faster to use and easier to operate with only one hand, since it will automatically return to its starting position.

According to an embodiment, the sled is provided with wheels for rolling along a sled guide arranged in a magazine holder. Preferably, said wheels are arranged to roll on opposite surfaces of the sled guide. Thereby, the sled will be prevented from jamming.

According to an embodiment, the fastening tool holder is adapted for connecting to the housing of a power screwdriver. Thereby, commercially available power screwdrivers may be used, which facilitates spare parts management and reduces total system cost.

According to an embodiment, the roof clip mounting tool further comprises a folding actuator configured for actuating a pivotal folding arm of the magazine, said folding arm being adapted for folding, if a roof mounting clip of said magazine has been fed to an attaching position, at least a portion of a free end of said roof mounting clip about a roof seam edge of a roof panel. Such a tool speeds up the process of fitting roof mounting clips to be folded into a roof panel seam.

According to an embodiment, the folding actuator is coupled to a fastening tool holder so as to fold said at least a portion of a free end when the fastening tool holder is moved from a raised position to a lowered position. Such an arrangement is easy to use, and may allow feeding, folding and/or fastening the roof mounting clip in a single operation.

According to an embodiment, the folding actuator is configured as a piston to be axially moved together with the fastening tool holder. Such a construction is reliable and has few moving parts.

According to an embodiment, a lower end of said piston is provided with a guide for engaging with a mating guide of said folding arm. This reduces the risk that the piston slips off the folding arm, thereby allowing for more generous production tolerances for the roof clip mounting tool as well as the magazine.

According to another embodiment, said mounting tool is used with a strip-shaped feed magazine comprising a plurality of roof mounting clips to be fed to a fastening tool for fastening said roof mounting clips onto a roof support structure, the roof mounting clips being releasibly attached to and distributed along said feed magazine. By way of example, the roof mounting clips may be attached by gluing or by heat-pressing them to the magazine. Such a feed magazine allows the roof mounting clips to be efficiently and safely fed to the fastening tool, for efficient and safe fitting of the roof mounting clips to the support structure.

According to an embodiment, the feed magazine further comprises a plurality of fasteners, to be driven into said roof support structure by said fastening tool to fasten said roof mounting clips to said roof support structure, said fasteners being releasibly attached to and distributed along said feed magazine. Using such a feed magazine, a fastener and a roof mounting clip to be fastened by said fastener can simultaneously be fed to a fastening tool. Thereby, the need for separately feeding or holding the fasteners when fastening the roof mounting clips to the support structure is reduced.

According to yet another embodiment, the mounting tool is used with a strip-shaped feed magazine for holding roof mounting clips to be fed to a fastening tool, the feed magazine comprising a plurality of clip holders, distributed along said feed magazine, for holding roof mounting clips to be fastened onto a roof support structure by said fastening tool. Such a feed magazine allows the roof mounting clips to be efficiently and safely fed to the fastening tool, for efficient and safe fitting of the roof mounting clips to the support structure.

According to an embodiment, the feed magazine further comprises a plurality of fastener holders, distributed along said feed magazine, for holding fasteners to be driven into said roof support structure by said fastening tool so as to fasten said roof mounting clips to said roof support structure. Using such a feed magazine, a fastener and a roof mounting clip to be fastened by said fastener can simultaneously be fed to a fastening tool. Thereby, the need for separately feeding or holding the fasteners when fastening the roof mounting clips to the support structure is reduced.

According to an embodiment, said fastener holders are configured for holding a fastener at a selectable distance from said roof support structure. Thereby, one single magazine design can be used together with one single fastener length for fastening roof mounting clips of different lengths. According to an embodiment, the fastener holders are configured for holding the respective fasteners at said selectable distance from the roof support structure by means of axially separated beads.

According to an embodiment, each of said fastener holders is configured for guiding a fastener at two axially separated locations. Thereby, fasteners may be attached to said support structure with a higher precision.

According to an embodiment, each of said fastener holders has a cylindrical inner surface for guiding a fastener head, and a tapering fastener exit for guiding a fastener body.

According to an embodiment, each of said clip holders is configured as a portion of a snap-lock for engaging with a roof mounting clip having a mating portion of said snap-lock, said snap-lock being configured to release when the respective roof mounting clip is pulled in a direction towards said roof support structure. Thereby, roof mounting clips may be released from their respective holders by the respective fasteners, when the fasteners are driven into the roof support structure.

According to an embodiment, a first end of the feed magazine is provided with a first end connecting device, and a second end of the feed magazine is provided with a second end connecting device adapted to mate with a first end connecting device of another, identical strip-shaped feed magazine. Thereby, feed magazines may easily be connected in series to form an endless roof mounting clip feed, such that no complicated operation for loading or aligning the feed magazine in a roof clip mounting tool is required for each feed magazine. Preferably, said connecting devices together form a snap lock for snapping together when said feed magazine and said another feed magazine are pressed together in the longitudinal direction. Thereby, a second feed magazine can be connected in series with a first feed magazine, already present in the roof clip mounting tool, by simply pressing the ends of the feed magazines together along the direction of a magazine guide.

According to an embodiment, a plurality of said fastener holders are provided with a respective fastener, and a plurality of said clip holders are provided with a respective roof mounting clip, each of said roof mounting clips having a mounting hole in front of at least one of said fasteners.

According to an embodiment, the feed magazine further comprises a plurality of folding arms, each of which is pivotally connected to a main body portion of the magazine and adapted to fold, when pivoted, at least a portion of a free end of a respective roof mounting clip. When used in combination with an appropriate mounting tool, this speeds up the process of fitting roof mounting clips to be folded into a roof panel seam.

According to an embodiment, said folding arm is substantially L-shaped, with an upright portion and a base portion, and arranged to pivot about an upper end of the upright portion. Such a shape is particularly well suited for being pivoted by a vertically reciprocating folding actuator of a mounting tool.

According to an embodiment, the feed magazine further comprises a folding actuator guide, extending along an upper surface of the base portion, for engaging with a mating guide of a folding actuator. This reduces the risk that the folding actuator slips off the folding arm, thereby allowing for more generous production tolerances of the feed magazine.

According to an embodiment, each of said clip holders is provided with a clip back support for preventing the respective roof mounting clip from pivoting in the magazine while being folded.

According to an embodiment, each of said clip holders comprises a pair of opposite wedges for engaging with a pair of sheet metal edges of a roof mounting clip, said opposite wedges defining between them an upwardly narrowing space allowing the respective roof mounting clip to be wedged therebetween. Such clip holders are well suited for releasibly holding most types of sheet metal roof mounting clips, and in particular also those that are not provided with any designated fastening arrangement, such as a snap-lock, for connecting the roof mounting clip to the feed magazine.

According to still another aspect, which is not part of the claimed invention, parts or all of the above mentioned problems are solved or at least mitigated by a roof seam clip for fixing a seam of a metal roof to a roof support structure, the roof seam clip comprising a base plate for attaching to said roof support structure; a seam holder having a first end connected to said base plate and a second end configured for holding said seam; and a fastening arrangement for attaching the roof seam clip to a feed magazine. By way of example, the fastening arrangement may be configured as a portion of a snap-lock for engaging with a clip holder having a mating portion of said snap-lock. Such a roof seam clip may be used in a roof clip mounting tool or a feed magazine as described hereinbefore.

According to an embodiment, said portion of said snap-lock is configured as a cam-and-recess arrangement at said second end.

According to an embodiment, said portion of said snap-lock is configured as an upwardly facing hole arranged at the second end of the seam holder.

According to still another aspect, which is not part of the claimed invention, parts or all of the above mentioned problems are solved or at least mitigated by a method of mounting a roof panel to a roof support structure, the method comprising feeding a magazine holding a plurality of roof mounting clips to a fastening tool; and fastening said roof mounting clips to the roof support structure using said fastening tool.

According to an embodiment, the method further comprises feeding fasteners to said fastening tool.

According to an embodiment, the method further comprises folding said roof mounting clips about a roof seam edge of said roof panel using said fastening tool. This speeds up the process of fitting roof mounting clips to be folded into a roof panel seam

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Fig. 1 is a diagrammatic view in perspective of a strip-shaped feed magazine partly loaded with screws and roof mounting clips;
Fig. 2a is a diagrammatic view in section and in perspective of the strip-shaped feed magazine of Fig. 1 provided with a screw in a first selectable pre-defined vertical position;
Fig. 2b is a diagrammatic view in section and in perspective of the strip-shaped feed magazine of Fig. 1 provided with a screw in a second selectable pre-defined vertical position;
Fig. 3a is a diagrammatic view in perspective of two strip-shaped feed magazines, similar to those of Fig. 1, prior to connecting in series;
Fig. 3b is a diagrammatic view in perspective of the two strip-shaped feed magazines of Fig. 3a after having been connected in series;
Fig. 4 is a diagrammatic view in perspective of machine for screwing roof mounting clips onto a support structure, the machine comprising a feeding apparatus for feeding the magazines of Figs 1-3;
Fig. 5 is a diagrammatic view in perspective, partly in section, of the feeding apparatus of the machine of Fig. 4;
Fig. 6a is a diagrammatic view, partly in section, illustrating the feeding apparatus of Fig. 5 during loading with a magazine;
Fig. 6b is a diagrammatic view, partly in section, illustrating the feeding apparatus of Fig. 6a in a starting position with a screwdriver holder in a raised position and a sled in an advanced position;
Fig. 6c is a diagrammatic view, partly in section, illustrating the feeding apparatus of Fig. 6b while screwing a roof mounting clip onto a support structure;
Fig. 6d is a diagrammatic view, partly in section, illustrating the feeding apparatus of Fig. 6c after screwing the roof mounting clip onto the support structure, the feeding apparatus having the screwdriver holder in a lowered position and the sled in a retracted position;
Fig. 6e is a diagrammatic view, partly in section, illustrating the feeding apparatus of Fig. 6d during raising of the screwdriver holder from the lowered position, the sled still remaining in the retracted position;
Fig. 6f is a diagrammatic view, partly in section, illustrating the feeding apparatus of Fig. 6e having returned to the starting position of Fig. 6b and having advanced the magazine to the next indexing position;
Fig. 7 is a diagrammatic view in section and in perspective of a third embodiment of a strip-shaped feed magazine partly loaded with nails and roof mounting clips;
Fig. 8a is a diagrammatic view in perspective, partly in section, of a machine for nailing roof mounting clips to a support structure, the machine being provided with a feeding apparatus for feeding the magazines of Fig. 7, the feeding apparatus being illustrated with a nail gun holder portion in a raised position;
Fig. 8b is a diagrammatic view in perspective, partly in section, of the machine illustrated in Fig. 8a, the feeding apparatus being illustrated with the nail gun holder portion in a lowered position;
Fig. 9a is a diagrammatic view in section and in perspective of a fourth embodiment of a strip-shaped feed magazine partly loaded with nails and roof mounting clips;
Fig. 9b is a diagrammatic view in perspective of a nail-punch for use with the magazine of Fig. 9a;
Fig. 10 is a schematic view in section and in perspective of a sixth embodiment of a strip-shaped feed magazine partly loaded with nails and roof mounting clips;
Fig. 11 is a schematic view in section and in perspective of a seventh embodiment of a strip-shaped feed magazine partly loaded with nails and roof mounting clips;
Fig. 12 is a diagrammatic view of yet an embodiment of a feeding apparatus for feeding the magazines of Figs 1-3;
Fig. 13 is a diagrammatic view in perspective of yet an embodiment of a strip-shaped feed magazine loaded with screws and roof mounting clips;
Fig. 14 is a diagrammatic view in perspective of still an embodiment of a strip-shaped feed magazine partly loaded with screws and roof mounting clips;
Fig. 15 is a diagrammatic side elevation of a feeding apparatus adapted for feeding the magazine of Fig. 14 and for folding the roof mounting clips about a roof seam edge, the feeding apparatus being illustrated with a screwdriver holder in a raised position;
Fig. 16 is a diagrammatic view in perspective of the feeding apparatus of Fig. 15;
Fig. 17a is a diagrammatic view in perspective, partly in section, of a lower portion of the feeding apparatus of Figs 15-16 when positioning a roof mounting clip onto a roof seam edge;
Fig. 17b is a diagrammatic view in perspective, partly in section, illustrating the feeding apparatus of Fig. 17a while lowering the screwdriver holder, thereby screwing the roof mounting clip to a roof support structure and folding it about the roof seam edge; and
Fig. 17c is a diagrammatic side view, partly in section, illustrating the feeding apparatus of Figs 17a-b with the screwdriver holder in a completely lowered position.

### Detailed description of the exemplary embodiments

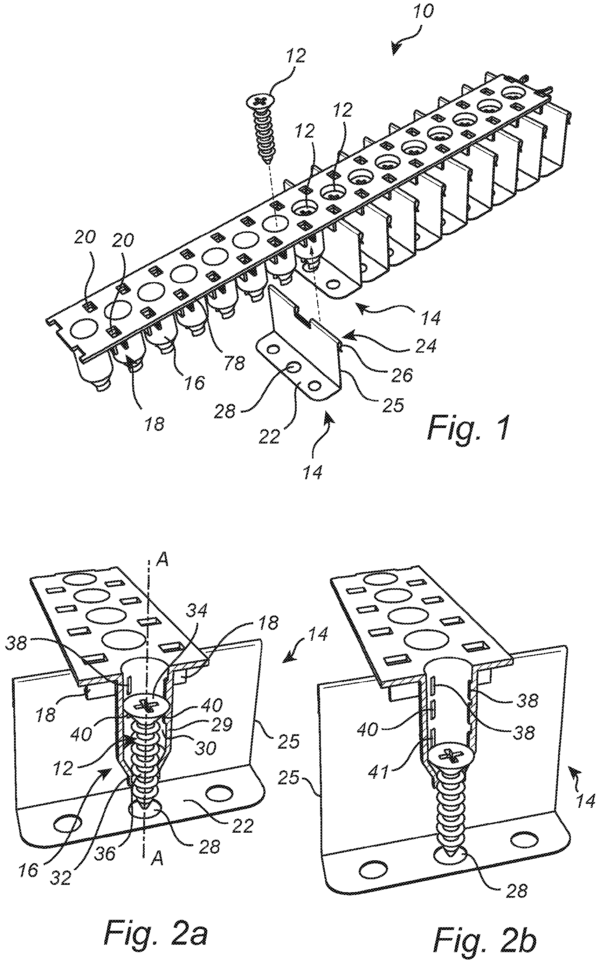

Fig. 1 illustrates a strip-shaped feed magazine 10 for holding a series of screws 12 and roof mounting clips 14 to be fed to a screwdriver. The magazine 10, which may be formed as a single, integral plastic component, is provided with a series of fastener holders, configured as screw holders 16 for holding the screws 12. The screw holders 16 are arranged in a straight line along the length of the magazine 10. Each screw holder 16 is associated with a respective pair of clip holders 18 for holding the roof mounting clips 14 at a predetermined position relative to the respective screw 12. Each screw holder 16 is also associated with a respective pair of feed lock apertures 20 for engaging with a feeding apparatus for feeding the magazine 10 in an indexed or step-wise manner.

The exemplary roof mounting clips 14 of Fig. 1 are roof seam clips configured to attach a seam of a metal roof onto the surface of a support structure. The roof mounting clips 14 comprise a base plate 22, for attachment to the surface of the support structure, and a seam holder 24 having an upright portion 25 and a hook 26 for gripping and holding the roof seam. The upright portion 25 extends from the base plate 22 along a plane essentially perpendicular to, i.e. forming an angle of between about 70° and 110° with, the base plate 22. A mounting screw hole 28 is arranged in the base plate 22 of each roof mounting clip 14.

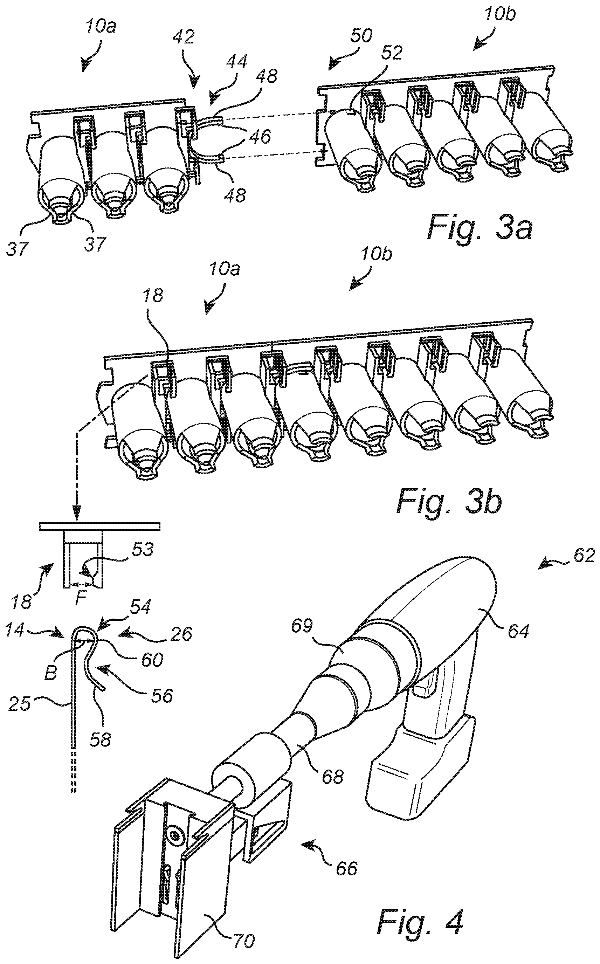

Referring now to Figs 2a-b, each screw holder 16 is arranged to hold the respective screw 12 such that it points towards the screw hole 28 of the base plate 22 of the respective roof mounting clip 14. Thereby, by moving the screw 12 along its axis A, it will penetrate the screw hole 28. The screw holder 16 comprises a circular cylindrical portion 29 having a circular cylindrical inner guiding surface 30, which tapers to a screw exit 32. In order to more accurately steer the screw 12 along the screw holder 16, and into the hole 28, the screw 12 is guided by the screw holder 16 at two axially separated screw guides along its length. The cylindrical guiding surface 30 has an inner diameter corresponding to the outer diameter of the head 34 of the screw 12, thereby forming a first screw guide of said two screw guides, for guiding the screw 12 by its head 34. The screw exit 32 forms a second screw guide of said two screw guides, for guiding the screw 12 by its body 36. The screw exit 32 engages with the threaded body 36 of the screw 12, such that, when rotating the screw 12 about its axis A, it will translate along the axis A. A pair of longitudinal slits 37 (Fig. 3a) allow the screw exit 32 to be pressed open enough to permit the screw head 34 to pass the screw exit 32.

Returning to Figs 2a-b, the cylindrical guiding surface 30 of the screw holder 16 is provided with a first, upper set of inwardly protruding beads 38, a second, intermediate set of inwardly protruding beads 40, and a third, lower set of inwardly protruding beads 41. The upper two sets of beads 38, 40 together define upper and lower limits of an upper screw holding position, illustrated in Fig. 2a, in which the head 34 of the screw 12 is trapped between the two upper sets of beads 38, 40. The lowermost set of beads 41 defines an upper limit of a lower screw holding position, illustrated in Fig. 2b, in which the head 34 of the screw 12 is trapped between the lower set of beads 41 and the tapering screw exit 32. Hence, the screw exit 32 acts as a lower limit of the lower screw holding position. Clearly, more beads can be added to the interior, cylindrical guiding surface 30 at additional axial positions in order to define additional predetermined, selectable axial positions of the screws 12. When loading the magazine 10 with screws 12, the screws 12 may be inserted into the screw holders 16 from above, and snapped into the desired axial position by pressing the screw head 34 past the respective set(s) of beads.

As is illustrated in Figs 2a-b, the possibility to insert a screw 12 at a selectable axial position inside the screw holder 16 facilitates using the same screw length in the same type of magazine 10 for different lengths of the upright portion 25 of the seam holder 24, thereby reducing the number of different screws and/or magazines that need to be produced and stored. Alternatively, different screw lengths can be used in the same type of magazine for one single length of the upright portion 25 of the seam holder 24, such that the screw length can be adapted to the properties of the structure into which it is to be screwed without having to redesign the magazine 10.

Fig. 3a illustrates a first feed magazine 10a and a second feed magazine 10b of the same type as the feed magazine 10 illustrated in Figs 1-2. A first end 42 of the first feed magazine 10a is provided with a female connector 44. The female connector 44 is shaped as a fork extending from the first end 42. Two barbs 46 extend inwardly from fork arm ends 48.

Even though not illustrated in Fig. 3a, the second feed magazine 10b has an identical first end provided with an identical female connector. A second end 50 of the second feed magazine 10b has an endmost screw holder 16b provided with two barbs 52, one of which is visible in the view of Fig. 3a. The female connector 44 of the first magazine 10a is shaped so as to grip the endmost screw holder 16b of the second magazine 10b such that the barbs 52 of the endmost screw holder 16b engage with the barbs 46 of the female connector 44. The endmost screw holder 16b of the second magazine 10b thereby forms a male connector for engaging with the female connector 44 of the first magazine 10a. The barbs 46, 52 of the connectors are oriented so as to form a snap-lock joint for snappingly joining the first and second magazines 10a-b by pressing them together in their longitudinal direction. Fig. 3b illustrates the two magazines 10a-b after having been snapped together.

The magnified view of Fig. 3b also more clearly illustrates a clip holder 18. Each clip holder 18 is, as seen in cross-section, shaped as a downwardly open fork. One of the fork arms is provided with an inwardly extending protrusion 53, so as to define, together with the other fork arm, a fork opening F. The hook 26 of the roof mounting clip 14 comprises, as seen in cross-section, an upper cam portion 54 having a width B that exceeds the fork opening F; an intermediate portion formed as a recess 56 for engaging with the protrusion 53 of the clip holder 18; and a lower portion 58 extending obliquely away from the upright portion 25 of the roof mounting clip 14 for facilitating alignment of the roof mounting clip 14 on the roof seam. When loading the magazine 10 with roof mounting clips 14, the roof mounting clips 14 may be snapped into form-fitting engagement with the respective clip holders 18 by pressing the upper portion 54 of the hook 26 through the fork opening F of the clip holder 18, the protrusion 53 thereby camming onto a camming surface 60 of the upper portion 54 of the roof mounting clip hook 26, until the protrusion 53 of the clip holder 18 snaps into the recess 56 of the hook 26. Similarly, the roof mounting clip 14 may be snapped out of the clip holder 18 by pulling it in the reverse direction, out of the fork opening F.

Fig. 4 schematically illustrates a hand-held machine 62 for attaching roof mounting clips to a support structure. The machine 62 comprises a portable power screwdriver 64 of the type well known to those skilled in the art and commercially available in an abundance of variants, such as a "Festool T 15". The machine 62 also comprises a portable feeding apparatus 66 for feeding a strip-shaped magazine, such as the roof mounting clip feed magazine 10 described hereinbefore with reference to Figs 1-3, to the power screwdriver 64. The feeding apparatus 66 is a portable roof clip mounting tool adapted for fitting roof mounting clips to the roof support structure; as will be elucidated further below, the roof clip mounting tool 66 may be used for feeding roof clips to several different types of fastening tools, said power screwdriver 64 being only an example. Even though it will be described hereinafter how the feeding apparatus 66 may be used for feeding a strip-shaped magazine 10 holding both screws 12 and roof mounting clips 14, it will be appreciated that the feeding apparatus 66 is also suitable for feeding a magazine holding roof mounting clips only, or screws only. The feeding apparatus 66 comprises a magazine holder 70, and a screwdriver holder 68 for connecting the feeding apparatus 66 to a non-rotating part of the power screwdriver 64, such as the power screwdriver housing 69.

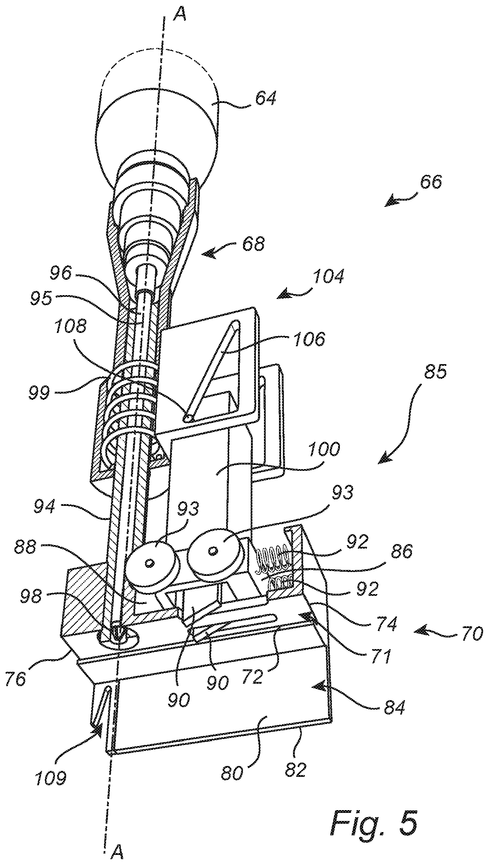

Fig. 5 illustrates the feeding apparatus 66 partly in section. The magazine holder 70 has a magazine guide 71 for guiding a strip-shaped magazine 10 (Figs 1-3) from a magazine guide entry 74 to a magazine guide exit 76. The magazine guide 71 is formed by two opposite, parallel grooves 72, one of which is visible in the view of Fig. 5, each groove 72 being shaped for slidingly holding a longitudinal edge 78 (Fig. 1) of the magazine 10. A pair of opposite, longitudinal walls 80, again only one of which is visible in Fig. 5, have abutment surfaces 82 for placing onto the surface of a support structure to which a roof mounting clip is to be attached. The two longitudinal walls 80 together define a feeding space 84 through which the magazine 10, provided with screws 12 and roof mounting clips 14 (Fig. 1), may be fed without interfering with the surface of the support structure. At a forward end of the magazine guide 71, each of the two walls 80 is provided with a downwards open, V-shaped groove 109, said two grooves together forming a roof seam guide.

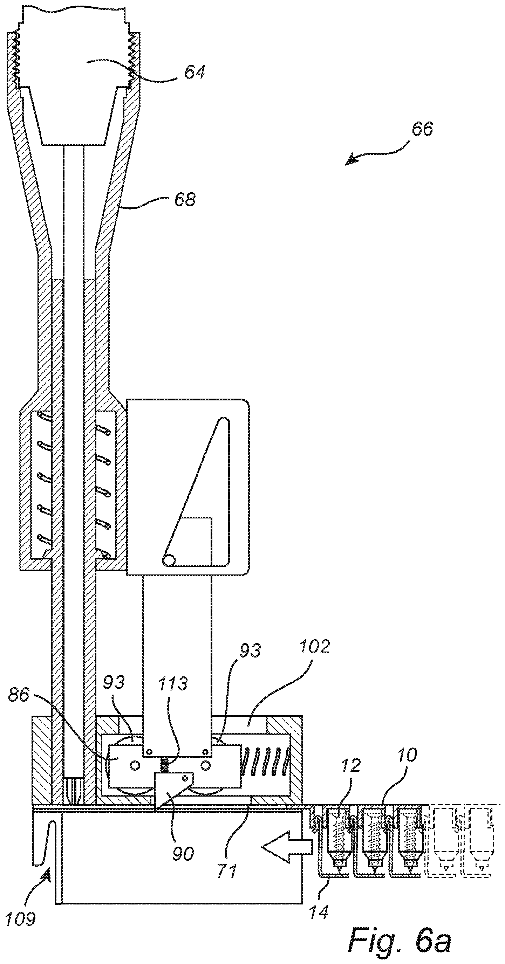

A magazine forwarding mechanism 85 comprises a sled 86, which is movable along a sled guide extending along the magazine guide 71. The sled guide is formed as a sled housing 88, which is arranged in the magazine holder 70 above the magazine guide 71. The sled 86 is provided with a pair of magazine driving dogs 90 for advancing the magazine 10 by engaging with the feed lock apertures 20 of the magazine 10 (Fig. 1). The sled 86 is slidable between a retracted position and an advanced position, as will be described in more detailed with reference to Figs 6a-6f, and biased to the advanced position by means of a pair of helical compression springs 92. Four wheels 93, two of which are visible in Fig. 5, reduce the friction between the sled 86 and the sled housing 88.

The screwdriver holder 68 is guided relative to the magazine holder 70 by means of a screwdriver guide 94, which is rigidly joined with the magazine holder 70. The screwdriver holder 68 is slidingly connected to an outer surface of the screwdriver guide 94, such that the screwdriver holder can be vertically reciprocated relative to the magazine holder 70 along an axis A between a raised position and a lowered position. The screwdriver guide 94 also has a circular cylindrical inner space 95 forming a guide for a screwdriver bit 96. The circular cylindrical inner space 95 opens into the magazine guide 71. The screwdriver bit 96 is connected to, and arranged to be rotated by, the power screwdriver 64, and has a lower end 98 shaped as a cross-head screwdriver interface facing the magazine guide 71. Clearly, the lower end 98 of the screwdriver bit 96 may have any other suitable screwdriving interface, such as a torx interface.

An upper portion 100 of the sled 86 extends upwardly through an opening 102 (Fig. 6a) of the sled housing 88, and is connected to the screwdriver holder 68 by means of a wedge arrangement 104. The wedge arrangement 104 comprises a pair of wedge surfaces 106, one of which is visible in the view of Fig. 5, for engaging with a pair of sled retracting dogs 108, again only one of which is visible in the view of Fig. 5. The wedge surfaces 106 are arranged to move with the screwdriver holder 68 when the screwdriver holder 68 is vertically reciprocated, and thereby press upon the sled retracting dogs 108 such that the sled 86 is moved along the sled housing 88.

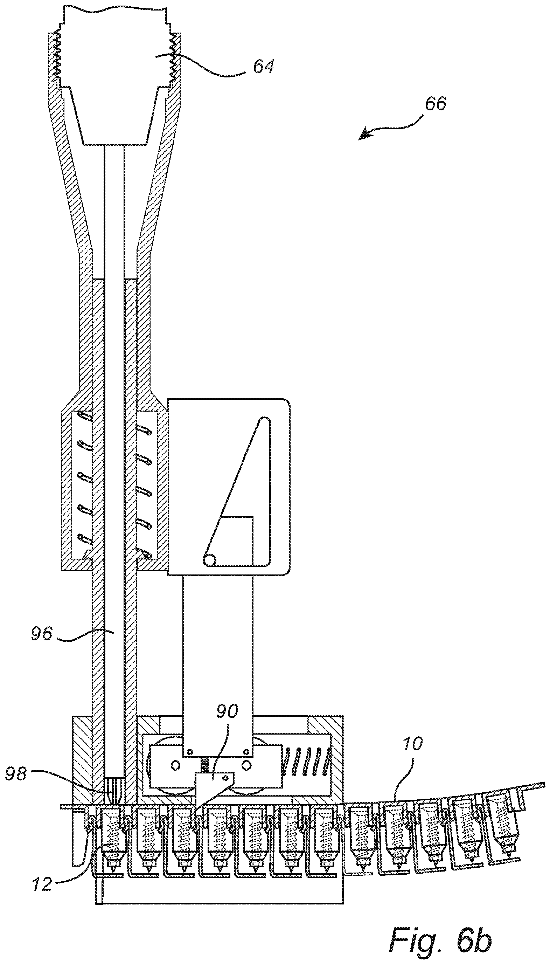

Fig. 6a illustrates the feeding apparatus 66 at rest, and with the screwdriver holder 68 in its raised position. The sled 86, which is illustrated in section, is in its advanced position. Each of the magazine driving dogs 90 is pivotally connected to the sled 86, and downwardly biased by means of a respective compression spring 113 so as to protrude into the magazine guide 71 when at the lowermost position illustrated in Fig. 6a. A magazine 10, provided with screws 12 and roof mounting clips 14, is loaded into the feeding apparatus 66 by sliding it into the feeding apparatus 66 in a forward direction, illustrated by an arrow, along the magazine guide 71. In doing so, the magazine driving dogs 90 will pivot against the action of the springs 113, so as to allow the magazine 10 to pass the magazine driving dogs 90 extending into the magazine guide 71. The magazine 10 is slid to a first indexing position illustrated in Fig. 6b, in which the lower end 98 of the screwdriver bit 96 faces the first screw 12 of the magazine, and the magazine driving dogs 90 engage with respective feed lock apertures 20 (Fig. 1) of the magazine 10. In the first indexing position of the magazine 10, the first roof mounting clip 14 of the magazine 10 is held in an attaching position inside the feeding apparatus 66, i.e. in a position ready to be attached to the support by the machine 62 (Fig. 4).

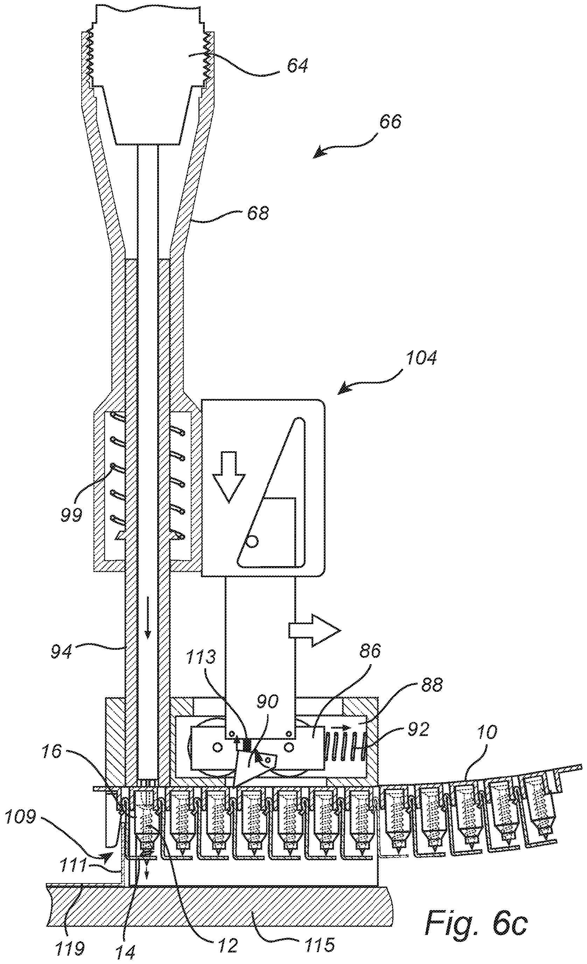

Fig. 6c illustrates how the feeding apparatus 66 is positioned for fitting a roof mounting clip 14 to a support structure 115, for holding an upright seam edge 111 of a metal roof panel 119 to the support structure 115. The upright seam edge 111 is to be subsequently joined with a mating seam edge of an adjacent metal roof panel in a non-illustrated manner, so as to form a roof seam. After joining the seam, the seam will be held to the support structure 115 by the roof mounting clip 14 attached thereto.

The feeding apparatus 66 is placed on the surface of the support structure 115 such that the abutment surfaces 82 (Fig. 5) rest on the surface of the support structure 115, and the roof seam guide 109 thereby engages with the roof seam edge 111 so as to position the hook 26 (Fig. 1) of the roof mounting clip 14 correctly above the seam edge 111. Thereby, the roof seam guide 109 will also automatically adjust the position of the magazine 10 along the magazine guide71, such that the screwdriver bit 96 (Fig, 6b) becomes axially aligned with the screw holder 16. Then, the power screwdriver 64 is pressed downwards, towards the surface of the support structure 115, such that the screwdriver holder 68 slides down along the screwdriver guide 94 against the bias of a screwdriver holder bias spring 99. Thereby, lower end 98 of the screwdriver bit 96 (Fig. 5) enters the first screw holder 16 of the magazine 10, and engages with the first screw 12. Simultaneously, the wedge arrangement 104 pushes the sled 86 backwards, along the sled housing 88 (Fig. 5), against the bias of the sled bias springs 92. The engagement between the screwdriver bit 96 and the screw holder 16 acts as a back stop, preventing the magazine 10 from sliding along the guide 71 (Fig. 5) in a backward direction opposite to the forward direction. Instead, the magazine driving dogs 90 pivot against the bias of the magazine drive dog bias springs 113, such that the magazine driving dogs 90 non-engagingly pass the screw magazine 10 as the sled 86 moves backwards.

The power screwdriver 64 is operated so as to rotate the screwdriver bit 96 and the screw 12, while continuing the downwards motion of the power screwdriver 64, such that the body 36 (Fig. 2a) of the screw 12 passes through the screw hole 28 (Fig. 1) of the roof mounting clip 14 and engages with the support structure 115. As the screw 12 is screwed into the support structure 115, the head 34 (Fig. 2a) of the screw 12, and the lower end 98 (Fig. 6b) of the screwdriver bit 96, are pressed through the screw exit 32 (Fig. 2a) by pressing the longitudinal slits 37 (Fig. 3a) open. The head 34 of the screw 12 also vertically pulls the roof mounting clip 14 downwards by the hole 28, such that the roof mounting clip 14 snaps free from the clip holders 18 (Fig. 1) of the magazine 10 and engages with the seam edge 111.

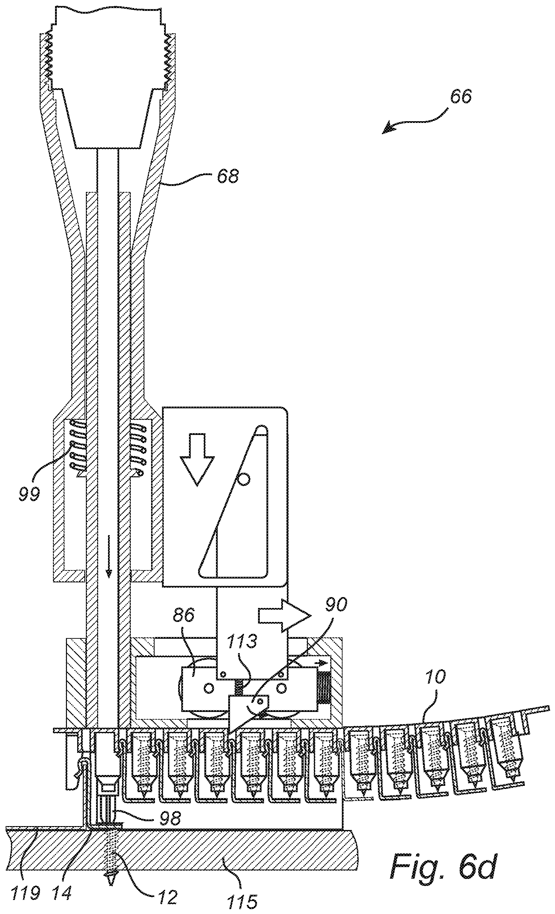

Fig. 6d illustrates the situation when the screw 12 has been screwed all the way into the support structure 115, and fixed the roof mounting clip 14 to the surface of the support structure 115 such that the roof seam edge 111 is held onto the support structure 115 by the hook 26 of the roof mounting clip 14. In Fig. 6d, the sled 86 has reached the retracted position. The magazine driving dogs 90 are now aligned with the next pair of feed lock apertures 20 (Fig. 1) of the magazine 10. So aligned, the driving dogs 90 pivot into the feed lock apertures 20 by the bias of the magazine driving dog bias springs 113, as indicated by a curved arrow. The screwdriver holder 68 is in its lowered position in Fig. 6d. It is apparent from the figure that the design is forgiving to fluctuations of the vertical travel of the screwdriver holder 68 caused by e.g. a curved surface of the support structure 115 or countersinking of the screw 12, since the point where the magazine driving dogs 90 engage with the feed lock apertures 20 is not determined by the lowermost end position of the screwdriver holder 68. The magazine driving dogs 90 may just as well non-engagingly pass the feed lock apertures 20 on the way to the rightmost, retracted position of the sled 86, and engage with the feed lock apertures 20 on the way back towards the advanced position of the sled 86 when the screwdriver holder 68 is raised.

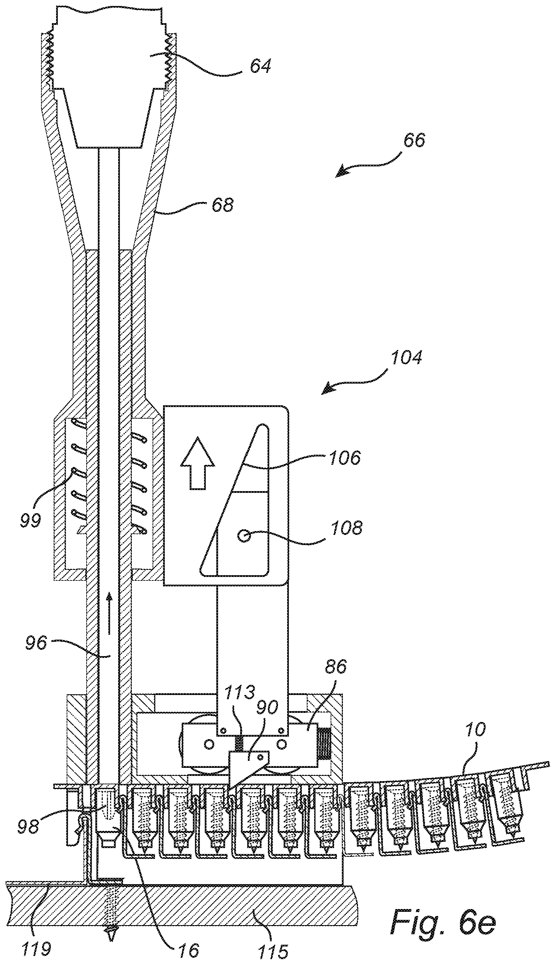

In order to advance the magazine 10 along the guide, the power screwdriver 64 is raised, said raising being assisted by the bias of the screwdriver holder bias spring 99. Fig. 6e illustrates the raising of the power screwdriver 64 and the screwdriver holder 68. The engagement between the screwdriver bit 96 and the screw holder 16 still acts as a stop, preventing the magazine 10 from being moved forward by the sled 86. This is permitted thanks to the sled driving dogs 108 being free to leave the wedge surfaces 106. To further elucidate the function of the wedge arrangement 104, the sled 86 is forced from the advanced position (Figs 6a-6b) to the retracted position (6d-6e) by the wedge arrangement 104 when the screwdriver holder 68 is moved from the raised position (Figs 6a-b) to the lowered position (Fig. 6d), but freed from the wedge arrangement 104 when moving the screwdriver holder 68 from the lowered position to the raised position.

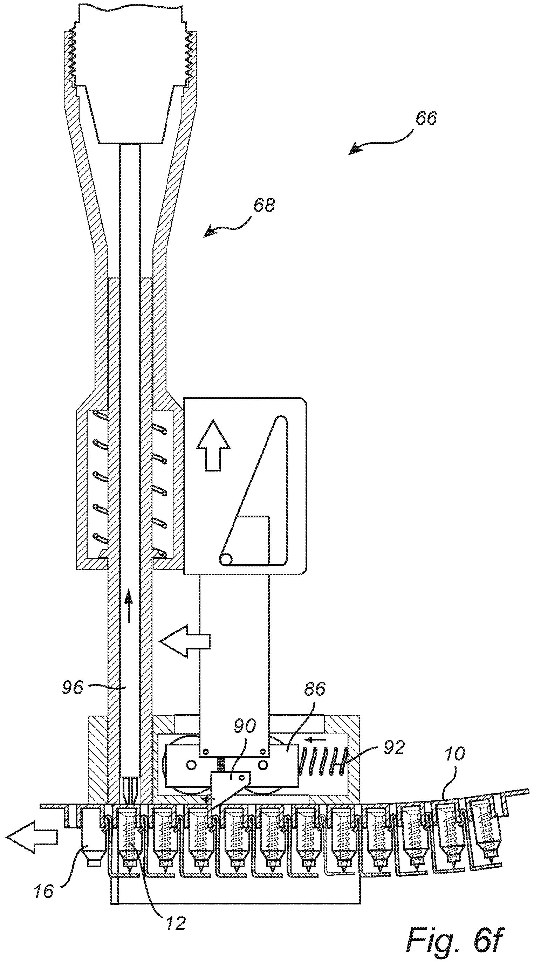

Fig. 6f illustrates the situation when the screwdriver holder 68 has returned to the raised position. The screwdriver bit 96 has now released the screw holder 16 of the magazine 10, thereby allowing the magazine 10 to be forwarded to the next, i.e. second, indexing position. This is achieved by the sled 86, engaging with the magazine 10 via the magazine driving dogs 90, moving from the retracted position (Fig. 6e) to the advanced position (Fig. 6f). The feeding apparatus 66 will now have returned once again to the starting position illustrated in Fig. 6b, with the difference that the magazine 10 will have been indexed one step forward, so as to place the second screw 12 of the magazine 10 in front of the screwdriver bit 96. In this second indexing position, the second roof mounting clip 14 of the magazine 10 is held in the attaching position inside the feeding apparatus 66, i.e. in a position ready to be attached to the support by the machine 62 (Fig. 4). In the event that the second screw 12 and the screwdriver bit 96 are not perfectly aligned at this stage, any slight misalignment will automatically be corrected when again lowering the seam edge guide 109 (Fig. 6c) over a roof seam edge 111 for the next attachment operation. Thanks to this tolerance to slight deviations in the indexing step length, no magazine forwarding stop arrangement, for stopping the magazine 10 at an exact, predetermined position for each indexing step, is needed. This simplifies the construction of the feeding device 66; in fact, the magazine 10 can be freely pressed right through the feeding apparatus 66 in the direction from the magazine guide entry 74 to the magazine guide exit 76.

When the feeding apparatus 66 approaches the end of the magazine 10, i.e. when most of the screws 12 and roof mounting clips 14 of the magazine 10 have been screwed to the support structure 115, a second magazine may be slid into the magazine guide 71 and snapped to the magazine 10 already present in the feeding apparatus 66, in the manner described in detail with reference to Fig. 3a, so as to allow a continuous, endless feed of screws 12 and roof mounting clips 14 to the feeding apparatus 66.

As can be seen in Figs 6a-6f, the sled housing 88 is large enough to allow the sled 86 to tilt somewhat, thereby permitting the sled wheels 93 to roll onto either of the ceiling or the floor of the sled housing 88, depending on the tilt of the sled 86. Whenever the wedge arrangement 104 forces the sled 86 against the sled bias (Figs 6a-d, 6f), the wheels 93 near the screwdriver bit 96 will roll onto the ceiling, while the wheels 93 near the sled bias springs 92 will roll onto the floor. Whenever the sled driving dogs 108 are free from the wedge surfaces 106 (Fig. 6e), the wheels 93 near the screwdriver bit 96 will roll onto the floor of the sled housing 88, while the wheels 93 near the sled bias springs 92 will roll onto the ceiling. Thereby, the sled 86 will be entirely free from jamming in the sled housing 88.

According to a second embodiment (not illustrated) of the roof mounting clip feed magazine, the feed magazine may be void of any screw holders, i.e. it may be configured for holding roof mounting clips only. Such a configuration may, if needed, be provided with a separate back-stop arrangement. In fact, no back-stop arrangement is required for any of the feeding apparatuses described in this disclosure; instead, the magazine and feeding apparatus may be designed so as to provide a sufficient friction between the longitudinal magazine edge 78 (Fig. 1) and the magazine guide 71 (Fig. 5) to prevent the magazine 10 from following the sled to the retracted position. Screws 12 may be pre-mounted to, and held by, the roof mounting clips 12 instead of directly by the magazine 10. By way of example, the screws 12 may be pre-mounted to the mounting holes 28 of the roof mounting clips 14 in such a manner that the screw body 36 (Fig. 2a) is in engagement with the periphery of the mounting hole 28. This embodiment may, depending on the application requirements and the properties of the support structure 115, have the drawback, compared to holding the screws 12 in screw holders 16 of the magazine 10, that the screw holding function of the mounting holes 28 imposes constraints on the design of the mounting holes 28, thereby e.g. making it difficult to obtain a perfect countersinking of the screw heads 34 into the surface of the support structure 115. Alternatively, screws may be fed completely separately to the power screwdriver 64 using any suitable screw feeding mechanism known in the art.

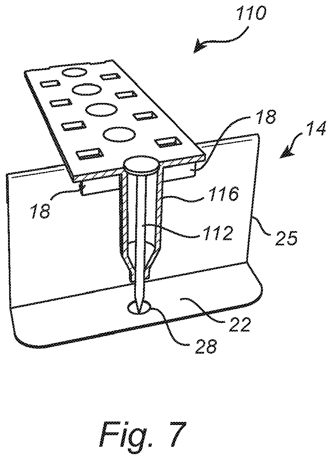

Fig. 7 illustrates a third embodiment of a feed magazine. The feed magazine 110 is in most aspects similar to the feed magazine 10 of Figs 1-6, but differs from the feed magazine 10 in that the fastener holders are configured as nail holders 116, for holding nails 112, instead of screws 12 (Fig. 1).

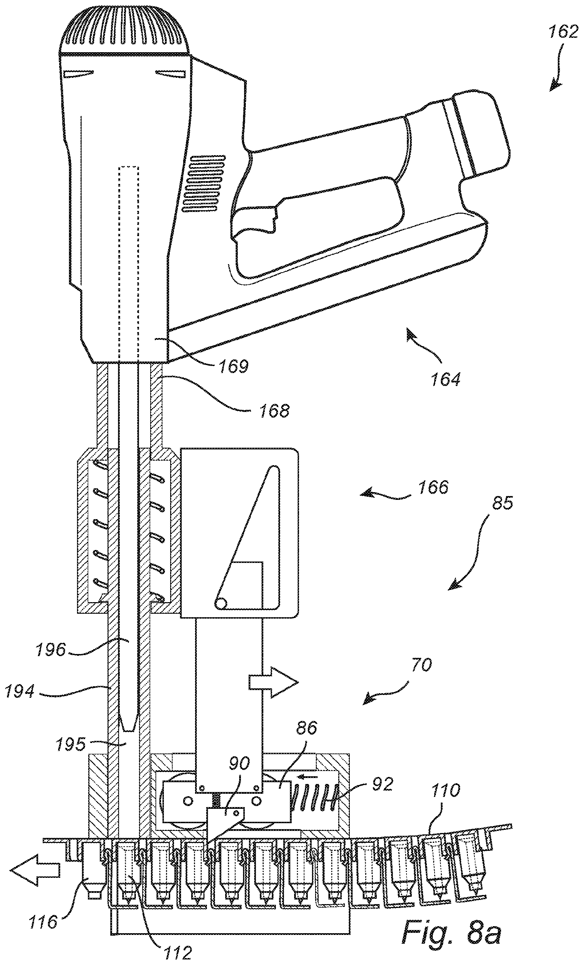

Figs 8a-b illustrate a hand-held machine 162 for attaching roof mounting clips to a support structure. Again, the machine 162 comprises a feeding apparatus 166, which forms a portable roof clip mounting tool adapted for fitting roof mounting clips14 to a roof support structure 115. The feeding apparatus 166, which is adapted for feeding the feed magazine 110 of Fig. 7, is in most aspects similar to the feeding apparatus 66 of Figs 4-6, but differs from the feeding apparatus 66 in that the feeding apparatus 166 is configured for being attached to a nail gun 164, instead of to a power screwdriver 64 (Fig. 4). The nail gun 164 may be a standard nail gun of the type widely commercially available; depending on the model, however, it may be somewhat modified for the purpose. Commercially available nail guns are often provided with a nail magazine and a feeding mechanism for the nails; however, as nails 112 are provided in the feed magazine 110, such separate nail feeding means of the nail puncher 164 itself may be removed. Furthermore, the nail gun 164 of Fig. 8a is provided with a nail punch member 196 for driving nails into the support structure 115. The nail punch member 196 is somewhat longer than those typically incorporated in a standard nail gun. As an alternative, a separate nail punch member extension may be used in combination with the shorter nail punch member included in a standard nail gun.

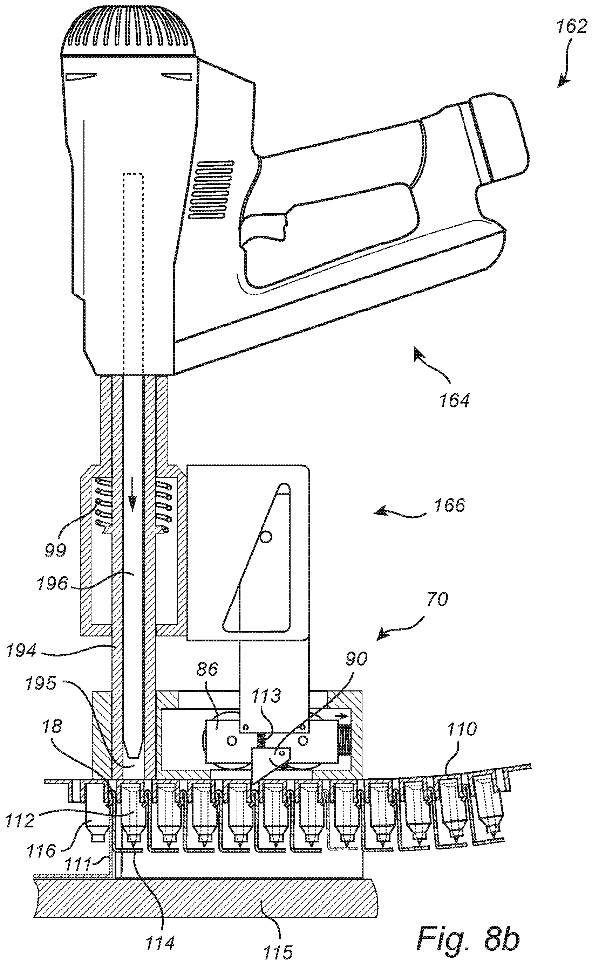

The feeding apparatus 166 comprises a nail gun holder portion 168 for attaching to the housing 169 of the nail gun 164; alternatively, the nail gun holder portion 168 may be integral with the housing 169 of the nail gun 164, such that the nail gun 164 and the feeding apparatus 166 together form a single, integral tool. Similar to the feeding apparatus 66 of Figs 1-4, the nail gun holder portion 168 is guided relative to the magazine holder 70 by means of a nail gun guide 194, which is rigidly joined with the magazine holder 70. The nail gun holder 168 is slidingly connected to an outer surface of the nail gun guide 194, such that the nail gun holder 168, and the nail gun 164, can be vertically reciprocated relative to the magazine holder 70 between a raised position (Fig. 8a) and a lowered position (Fig. 8b). Again, the nail gun guide 194 has a circular cylindrical inner space 195 forming a guide for the nail punch member 196.

Fig. 8a illustrates the nail gun 164 in the raised position. The nail gun 164 is loaded, i.e. the nail punch member 196 is in a retracted position, ready to strike downwards along the nail punch guide 195.

The magazine 110 is advanced by the feeding apparatus 166 in a manner similar to that described herein before with reference to Figs 6a-6f, i.e. by first lowering the nail gun holder 168 (Fig. 8b), thereby forcing the sled 86 to the retracted position, at which it engages with the magazine 110. A backstop arrangement (not shown) may, if needed, be configured as a portion of the nail gun holder 168, which portion is pushed into the magazine 110 when the nail gun holder 168 is lowered.

Then, the nail gun holder 168 may be raised again, such that the sled 86, when returning to its advanced position illustrated in Fig. 8a, advances the magazine 110 to the next roof mounting clip position. A backstop arrangement may, if needed, be configured as a portion of the nail gun holder 168 which portion is pushed into the magazine when the nail gun holder 168 is lowered.

Fig. 8b illustrates the nail gun 164 when in its lower position, the nail gun 164 still being loaded. When in this position, the nail gun 164 may be fired, the nail punch member 196 thereby accelerating downwards along the nail punch guide 195, striking the nail 116 through the roof mounting clip 14 and into the support structure 115. The punching force may be adjusted such that the roof mounting clip 14 is pulled free from the clip holder 18 of the magazine 110. Alternatively, the height of the side walls 80 (Fig. 5) may be selected such that the base 22 (Fig. 1) of the roof mounting clip 14 will abut the support structure 115 already when firing the nail gun 164; the roof mounting clip 14 may thereafter be pulled free from the clip holder 18 by lifting the feeding apparatus 166.

Typically, the nail gun 164 automatically reloads, i.e. automatically retracts the nail punch member 196 again after firing. The nail gun 164 may be powered by any suitable power means; commonly available nail guns are often powered by e.g. compressed air, explosive cartridges, combustible gas or electricity.

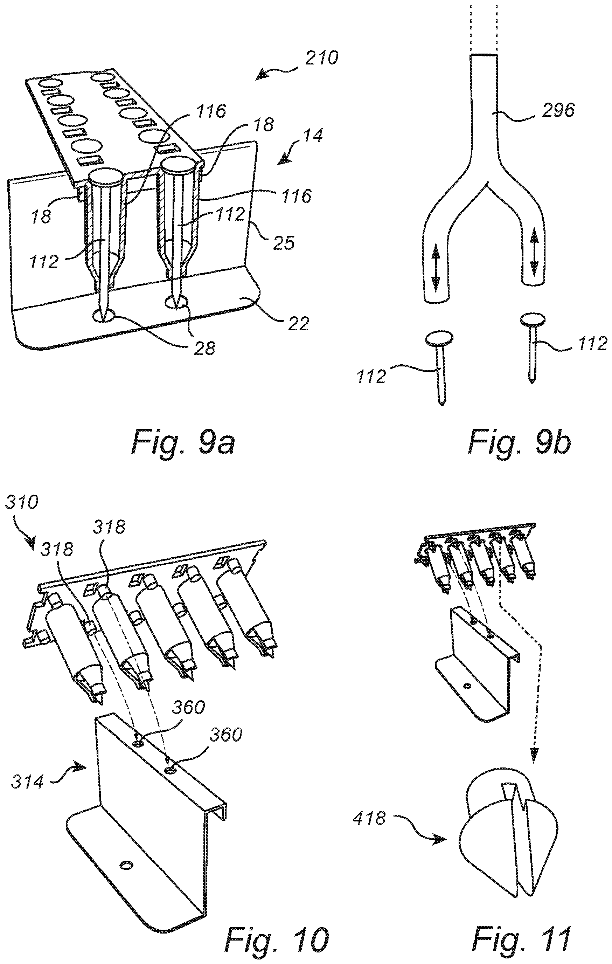

Fig. 9a illustrates a fourth embodiment of a feed magazine. The feed magazine 210 is in most aspects similar to the feed magazine 110 of fig. 7a, but differs from the feed magazine 110 in that the magazine 210 is provided with nail holders 116 arranged in two parallel rows extending in the longitudinal direction of the feed magazine 210. The two rows define pairs of nail holders 116, each pair of nail holders 116 holding a pair of nails 112, such that there is one pair of nails 112 for each roof mounting clip position of the magazine 210. The roof mounting clip 14 is provided with a corresponding pair of mounting holes 28. Fig. 9b illustrates how the pair of nails 112 held by the pair of holders 116 of Fig. 9a may be simultaneously punched into the support structure 115 by a bifurcated nail punch member 296. The feeding apparatus 166 of Figs 8a-b may be modified so as to have a bifurcated punch member 296 instead of the single, rod-shaped punch member 196 of Figs 8a-b. Clearly, such a modification could include a lower portion of the nail punch guide 195 being widened in the direction perpendicular to the plane of the illustrated section, such that there will be enough space for the bifurcated portion of the nail punch member 296 to reciprocate vertically. As an alternative to the bifurcated punch member 296 for synchronously punching the pair of nails 112 of Figs 9a-b, the machine 162 may be provided with a pair of parallel, synchronously operated, rod-shaped, i.e. non-bifurcated punches, i.e. one separate punch per row of nails 112.

According to a fifth embodiment (not illustrated) of the roof mounting clip feed magazine, the feed magazine may be void of any nail holders 116, i.e. it may be configured for holding roof mounting clips 14 only. Nails or staples may be fed separately, using any suitable nail or staple feeding mechanism known in the art, directly to the nail gun, which may punch the separately fed nails or staples through the base plate 22 of the roof seam clip 14. The base plate 22 of the roof seam clip 14 does not need to be provided with through-holes 28 for allowing the nails to pass; instead, nails may be punched through the sheet metal of the base plate 22, thereby forming their own through-holes during mounting.

Fig. 10 illustrates a sixth embodiment of a feed magazine. The feed magazine 310 is in most aspects similar to the feed magazine 110 of fig. 7, but differs from the feed magazine 110 in that each clip holder 318 is configured as a cylindrical protrusion extending downwards from the feed magazine 110. An upper portion of a roof mounting clip 314 is provided with a pair of circular through-holes 360 for receiving a corresponding pair of clip holders 318. The mating protrusions 318 and holes 360 are of matching size and shapes, so as to form a friction engagement between the feed magazine 310 and the mounting clip 314. Clearly, even though only one single roof mounting clip 314 is illustrated, it will be appreciated that the magazine 310 may hold a plurality of roof mounting clips 314.

The protrusions 318 need not be circular cylindrical. A suitable friction engagement with a circular through-hole 314 may be obtained by e.g. a cylindrical protrusion having e.g. a star-shaped cross-section. Furthermore, a protrusion 318 need not be strictly cylindrical; as an exemplary alternative, it may be provided with a waist (not illustrated) for receiving the periphery of the corresponding through-hole 314, such that the protrusion 318 defines a knob forming a snap-lock together with the respective through-hole 360. An alternative is illustrated in Fig. 11, which differs from Fig. 10 in that each clip holder 418 is shaped as a longitudinally split arrow. Clearly, the protrusions 318, 418 and holes 360 may have any suitable shape for engaging with each other in a frictional, form-fitting or snapping manner.

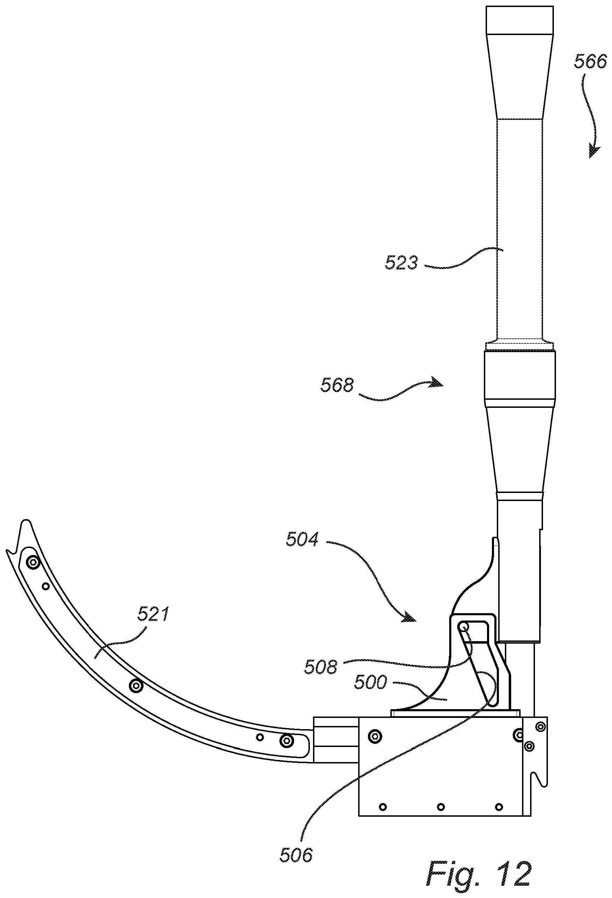

Fig. 12 illustrates still an embodiment of a feeding apparatus 566. The feeding apparatus 166, which is adapted for feeding the feed magazine 10 of Fig. 1, is in most aspects similar to the feeding apparatus 66 of Figs 4-6, but differs from the feeding apparatus 66 in that the feeding apparatus 566 is provided with an optional, upwardly curved magazine guide extension 521, which is configured for firmly guiding the magazine 10 (Fig. 1) at a distance from the roof support structure 115 (Fig. 6c) so as to make the feeding apparatus 566 more compact and easier to handle, particularly if using a long magazine 10. The magazine guide extension 521 may also, depending on its length, permit the insertion of several consecutive magazines 10, connected in series, in the magazine guide.

The feeding apparatus 566 is also provided with an optional, removable screwdriver holder extension 523, which allows the construction worker to adjust the total height of the feeding apparatus 566, and thereby select the most comfortable and ergonomic working position when installing roof mounting clips. Clearly, the screwdriver holder extension 523 should be combined with a longer screwdriver bit 96 (Fig. 5).

Another difference between the two embodiments 66, 566 is that the wedge arrangement 504 of the feeding apparatus 566 is turned upside down as compared to the wedge arrangement 104 of the feeding apparatus 66. The wedge surfaces 506 are provided on the upper portion 500 of the sled (not shown), whereas the sled retracting dogs 508 are provided on the screwdriver holder 568. Thereby, the wedge arrangement 504 of Fig. 12 may be made more compact than the wedge arrangement 104 of Figs 4-6. Another benefit is that the engagement between the wedge surfaces 506 and the sled retracting dogs 508 may be located closer to the sled, so as to reduce any tendency of the sled to jam.

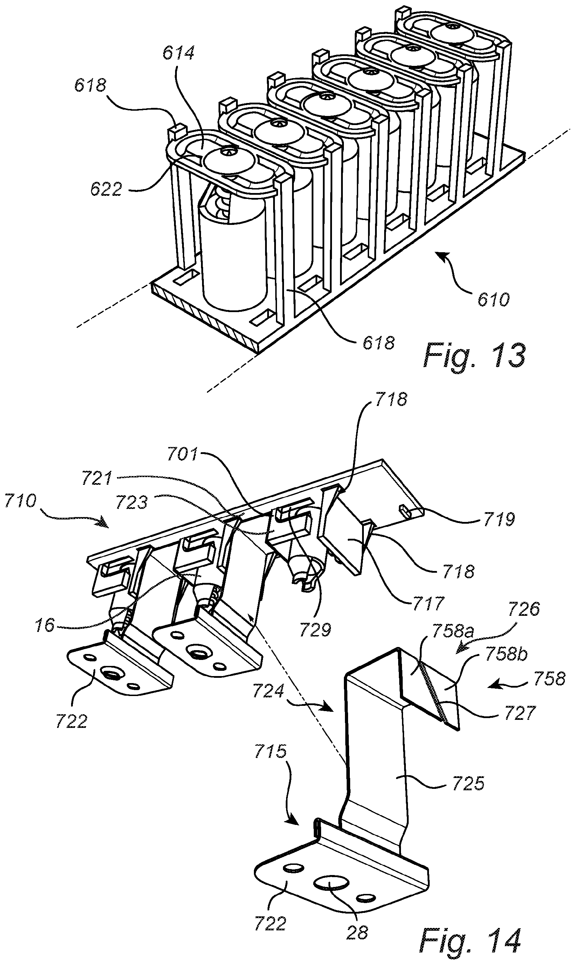

Fig. 13 illustrates yet an embodiment of a feed magazine. The feed magazine 610, which is illustrated upside-down, is in most aspects similar to the feed magazine 10 of Figs 1-6, but differs from the feed magazine 10 in that the clip holders 618 releasibly hold roof mounting clips 614 of pressure plate type, i.e. having no seam holder. Therefore, the clip holders 618 hold the roof mounting clips 614 by the base plate 622. Pressure plate type roof mounting clips 614 may be used for attaching e.g. a membrane layer, such as a layer of roofing board, to a roof support structure.

In an alternative embodiment (not illustrated), the roof mounting clips 614 may be individually held in an upright position, i.e. turned 90° about an axis perpendicular to the feeding direction of the magazine 610, such that they can be packed tighter along the magazine 610. In such an embodiment, each roof mounting clips 614 may, after having reached the attaching position of the feeding device, be individually tilted to a horizontal position before being attached to the support structure. The magazine 610 may also be free from screw holders, and screws may be separately fed to the power screwdriver.

Fig. 14 illustrates a strip-shaped feed magazine 710 holding a plurality of roof mounting clips 714. The roof mounting clips 714 are adapted for attaching a metal roof panel seam to a support structure, optionally via a compressible layer such as an insulation layer. Each roof mounting clip 714 comprises a base plate 722, for attaching to the support structure, and a seam holder 724 to be folded into the seam. The base plate 722 and seam holder 724, each of which is integrally formed by a respective single piece of sheet metal, are in sliding engagement with each other via a pair of mating double-folds 715. The base plate 722 is provided with a through-hole 28 for receiving a screw for anchoring the roof mounting clip 714 to the support structure.

The seam holder 724 comprises an upright portion 725, an upper end of which is twice folded approximately 90° to form an essentially rectangularly U-shaped hook 726, as seen in profile, for engaging with the roof seam. The free end 758 of the hook 726 is divided into two tabs 758a, 758b by a slit 727, thereby facilitating folding of at least one of these two tabs about a roof seam edge of a roof panel. The slit 727 may, by way of example, be a clip formed by plate-shears or the like. It is however preferred, though, that the slit 727 has a non-zero width, such that the tabs 758a-b do not engage with each other when one of them is folded. Such a non-zero-width slit 727 may be formed e.g. by sawing, by expanding a clip, or by any other suitable method known to those skilled in the art. Preferably, the slit 727 has a width of at least 0,1 mm, and more preferred, at least 0,3 mm.

Again, the magazine 710 is provided with a row of screw holders 16 extending along the magazine 710. Each screw holder is associated with a respective pair of opposite wedges 718 for holding a roof mounting clip 714. The opposite wedges 718 define between them an upwardly narrowing space, allowing the respective roof mounting clip 714 to be wedged between them by pressing it upwards in the view of Fig. 14. In the embodiment illustrated in Fig. 14, the wedges 718 are adapted to engage with opposite sheet metal edges at one of the 90° folds of the hook 726 of the respective roof mounting clip 714.

Each roof mounting clip position of the magazine 710 is also provided with a respective clip back support 717, against which the back surface of the upright portion 725 of the respective clip 714 is allowed to rest, and a free end support 719 for supporting the free end 758 of the hook 726 of each clip 714. The clip back and free end supports 717, 719 also assist in holding the clips 714 in the magazine 710 by friction.

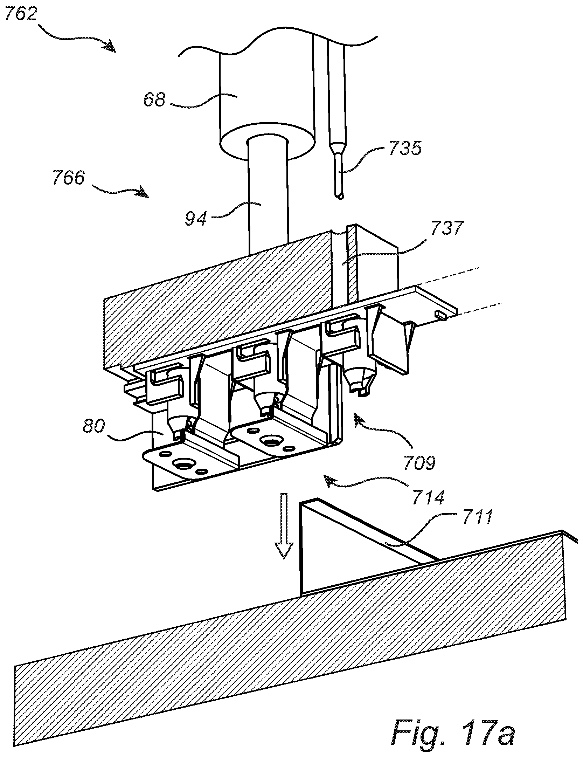

Moreover, each roof mounting clip position of the magazine 710 is provided with a respective folding arm 723, which is connected to a main body portion 721 of the magazine 710. Each folding arm 723 has the shape of an "L", the upper end 701 of the upright leg of the "L" being connected to the main body portion 721. The upper end 701 of the upright leg of the "L" is thin enough to allow bending, such that the folding arm 723 may be forced to pivot about said upper end 701. A respective aperture 729 is arranged in the main body portion 721 of the magazine 710 to allow accessing the base leg of the L-shaped folding arm 723 from above. The operation of the folding arms 723 will be described in greater detail further below, with reference to Figs 17a-c.

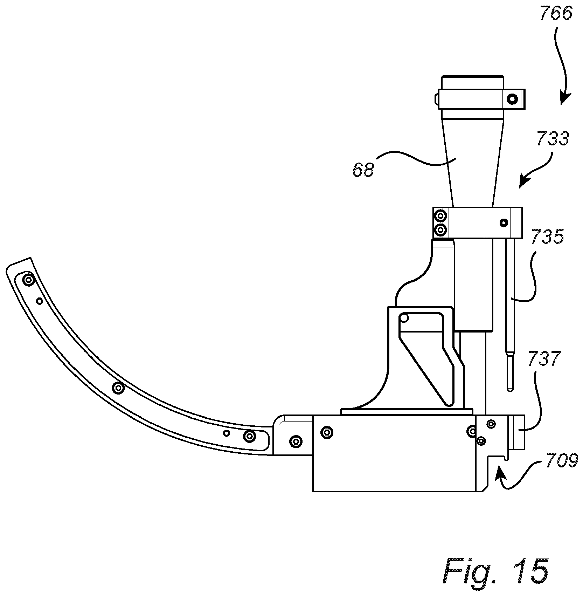

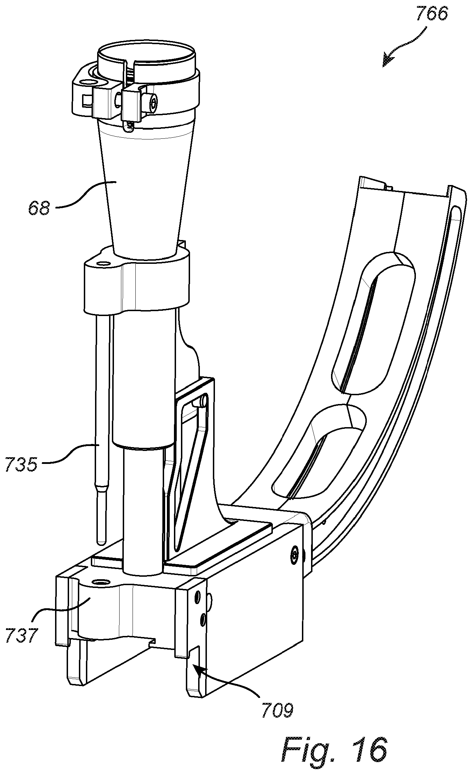

Figs 15-16 illustrate yet an embodiment of a feeding apparatus 766. The feeding apparatus 766, which is adapted to feed the feed magazine 710 of Fig. 14, is in most aspects similar to the feeding apparatus 66 of Figs 4-6, and like the feeding apparatus 66 it is a portable roof clip mounting tool for fitting roof mounting clips to a roof support structure. Like the feeding apparatus 66, the feeding apparatus 766 can be combined with a fastening tool to form a hand-held machine for attaching roof mounting clips to a support structure. However, the feeding device 766 differs from the feeding apparatus 66 in that the feeding apparatus 766 is provided with a folding arrangement 733 for folding the free end 758 of each roof mounting clip 714 about a roof seam edge of a roof panel. The folding arrangement 733 comprises a folding piston 735, which is coupled to the fastening tool holder 68, and a folding piston guide 737 for providing lateral support to the folding piston 735. The folding piston 735 is adapted to, when the fastening tool holder 68 is moved from the raised position to the lowered position, penetrate through the folding piston guide 737 and the aperture 729 of the magazine 710, and actuate the folding arm 723 associated with the roof mounting clip 714 currently in the attaching position of the feeding apparatus 766. A roof seam guide 709 facilitates positioning the hook 726 of the roof mounting clip 714 correctly above a roof seam edge in a manner similar to what has been described hereinbefore with reference to the roof seam guide 109.

Figs 17a-c schematically illustrate the operation of a hand-held machine 762 comprising a feeding apparatus 766. For reasons of clarity, the upper parts of the machine 762 are not illustrated; it will be appreciated that they may be similar to the corresponding upper parts of the machine 62 described hereinbefore. The interior parts of the feeding apparatus are not illustrated for the same reason; it will be appreciated that the feeding mechanism of the feeding apparatus 766 may correspond to that of the feeding apparatus 66 described hereinbefore. Moreover, one of the side walls 80 (Fig. 5) is broken away to expose the operation of the folding arm 723. The machine 762 allows attaching roof mounting clips 714 to a support structure and folding their respective tabs 758a about a roof seam edge of a metal roof panel, wherein the attaching and folding operations for each clip 714 are performed in a single operation.

Starting with Fig. 17a, the machine 762 with the feeding apparatus 766 is lowered over a roof panel seam edge 711, which is to, together with a mating seam edge of an adjacent roof panel (not shown), be folded into a roof seam. The feeding apparatus 766 is loaded with a feed magazine 710 having been indexed such that a roof mounting clip 714 is in the feeding apparatus' 766 attaching position.

After having positioned the feeding apparatus 766 in the position determined by the roof seam guide 709, the roof mounting clip 714 will have been correctly positioned over the roof panel seam edge 711.

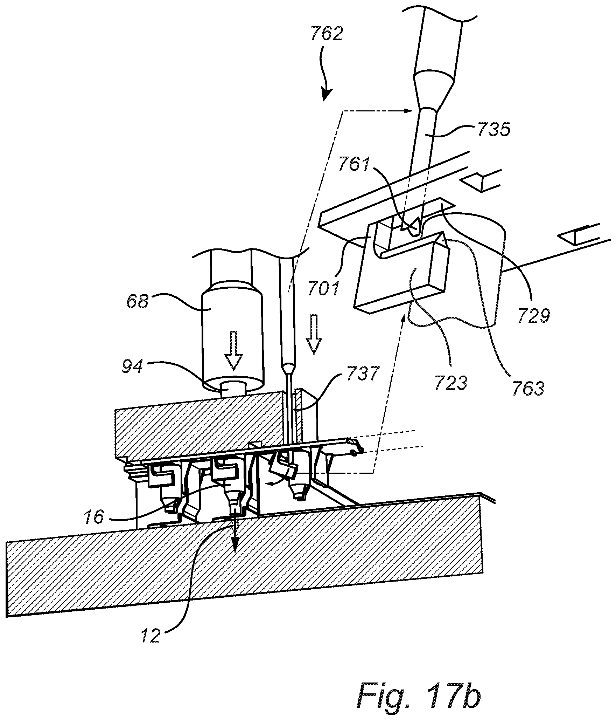

Turning now to Fig. 17b, the fastening tool holder 68 is lowered along the fastening tool guide 94, while the power screwdriver (not illustrated) held by the fastening tool holder 68 is operated, thereby driving a screw 12 held by the screw holder 16 into the roof support structure in the same manner as has been described hereinbefore with reference to Figs 6c-6d. Simultaneously, the folding piston 735 is axially moved with the fasting tool holder 68 such that it follows the piston guide 737, penetrates the aperture 729 above the folding arm 723 associated with the mounting clip 714 to be attached, and engages with said folding arm 723. The folding piston 735 actuates the folding arm 723 such that the folding arm 723 pivots about its upper end 701, thereby folding the tab 758a (Fig. 14) of the roof mounting clip's 714 free end 758 (Fig. 14). During folding, the clip back support 717 (Fig. 14) prevents the roof mounting clip 714 from pivoting inside or being pressed out of the magazine 710 while being folded.

To reduce the risk that the folding piston 735 slips off the folding arm 723, the lower end of the folding piston 735 is provided with a guide groove 761, which mates with a guide ridge 763 extending along the upper surface of the pivot arm 723.

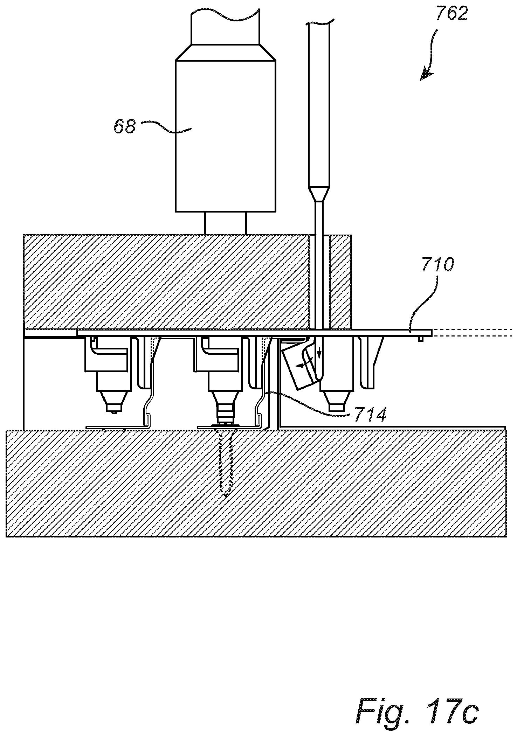

Fig. 17c illustrates the machine 762 and the roof mounting clip 714 after the folding and screwdriving operations have been finalized. The magazine 710 is now ready to be indexed to the next position by lifting the fastening tool holder 68 in the manner described hereinbefore with reference to Figs 6e-f.

The invention has mainly been described above with reference to a few embodiments. However, as is readily appreciated by a person skilled in the art, other embodiments than the ones disclosed above are equally possible within the scope of the invention, as defined by the appended patent claims.

For example, the feed magazines 10, 110, 210, 310, 710 described hereinbefore holds clips 14, 314, 714 and fasteners 12, 112 in a one-to-one or one-to-two relationship. However, the magazine may, as an alternative, be arranged for holding any suitable number of fasteners per clip. The fasteners need not all be spaced by the same distance along the magazine, since the feeding apparatus may allow non-uniform indexing of the magazine, e.g. by having the feed lock apertures 20 located at non-uniform distances along the magazine 10, 110, 210, 310, 710. Moreover, the feed lock apertures 20 need not be configured as through-holes; instead, they may be configured as e.g. notches in the longitudinal edge 78 of the magazine. In fact, any other suitable structure may be used for engaging with the magazine driving dogs 90 instead of apertures 20, such as protrusions distributed along the magazine. Alternatively, the dogs 90 may engage with the roof mounting clips 14 instead of with the magazine 10, 110, 210, 310, 710.

The feeding apparatus 66 described with reference to Figs 4-6 is illustrated in the figures as being symmetric with respect to a plane defined by the feeding direction of the magazine 10 and the screwdriver holder axis A. However, this is not necessary. The feeding apparatus 66 may be provided with e.g. only a single magazine driving dog 90 or a single sled retracting dog 108, and may have an asymmetric geometry also in other respects. The same reasoning applies, mutatis mutandis, to the feeding apparatuses 166, 566 and to the magazines 10, 110, 210, 310; they need not be symmetric with respect to said plane. Furthermore, the feeding apparatuses 66, 166, 566, 766 may be used for feeding roof mounting clips to other fastening tools than nail guns 164 or power screwdrivers 64. The portable roof clip mounting tool need not be adapted to be held by one hand; also two-handed operation is intended to be covered by the appended claims. Moreover, several embodiments having differing features are described herein; clearly, those differing features may be used in any suitable combination to form other embodiments, the invention being solely defined by the claims.

The constructions disclosed herein may also be implemented in embodiments outside the currently claimed scope, and thereby not forming part of the present claimed invention. Such embodiments may be the subject of divisional applications. By way of example, the feeding apparatuses 66, 166, 566 described hereinbefore may be used for feeding fastener magazines, such as screw magazines or nail magazines holding exclusively screws or nails, to e.g. a power screwdriver or nail gun, respectively.

Similarly, each of the magazines 10, 110, 210, 310 described hereinbefore may be modified to hold fasteners only, so as to form a strip-shaped feed magazine for holding fasteners, such as screws or nails, to be fed to a fastening tool, such as a power screwdriver or nail gun.

Similarly, the clip holders 18, 318, 418 may be shaped for holding components to be fastened other than roof mounting clips, such as other types of building brackets used in construction.

The feed magazines 10, 110, 210, 310, 710 described hereinbefore have features that may be regarded as separate inventive concepts, which are however not defining the currently claimed invention. By way of example, the beads 38, 40, 41 may be used for holding a fastener in a selectable axial position also in a feed magazine that is not provided with clip holders. The same reasoning applies to the snap-lock arrangement for snappingly connecting two feed magazines in series, as well as to the concept of axially guiding a screw at two separate axial positions for higher precision; also those concepts may be applied to magazines holding exclusively screws or nails.

The roof clip mounting tool 766 can be used for mounting roof mounting clips to the roof seam by merely folding them about the seam edge of the roof panel, i.e. without driving a fastener into the roof support structure. Fasteners may be driven into the roof support structure in a subsequent operation, using another tool. Thereby, a fastening tool is not needed for attaching the clip to the roof seam, and the folding actuator may be operated by any suitable means other than a fastening tool, such as a handle. Hence, parts or all of the problems mentioned in the background section of this disclosure are solved by a portable roof clip mounting tool, for fitting roof mounting clips to a seam edge of a roof panel, the roof clip mounting tool comprising a magazine forwarding mechanism for feeding a strip-shaped roof mounting clip magazine, and a folding actuator for folding, when a roof mounting clip of said magazine has been fed to an attaching position, at least a portion of a free end of said roof mounting clip about said seam edge. Other features and embodiments are apparent from the description hereinbefore and the appended claims.

## Claims

1. Portable roof clip mounting tool (66; 166; 566) for fitting roof mounting clips (14; 314; 614; 714) to a roof support structure (115), the roof clip mounting tool (66; 166; 566) comprising a magazine forwarding mechanism (85) for feeding a strip-shaped roof mounting clip magazine (10; 110; 210; 310; 710) to a fastening tool (64; 164) for driving fasteners (12; 112) into the roof support structure and a magazine guide (71) for guiding said strip-shaped roof mounting clip magazine to the fastening tool (64; 164), wherein the magazine forwarding mechanism (85) comprises a sled (86), movable along said magazine guide (71) between a retracted position and an advanced position, and biased to said advanced position, said sled (86) being provided with a dog (90) configured to engage with and advance said strip-shaped roof mounting clip magazine in a forward direction when the sled moves from the retracted position to the advanced position, and to non-engagingly pass the strip-shaped roof mounting clip magazine when the sled moves from the advanced position to the retracted position; wherein the magazine forwarding mechanism (85) further comprises a fastening tool holder (68; 168), said fastening tool holder (68; 168) being reciprocatable relative to the magazine guide (71) along a fastening tool guide (94; 194) between a raised position and a lowered position, said fastening tool holder (68; 168) being coupled to the sled (86) so as to move the sled from the advanced position to the retracted position when the fastening tool holder is moved from the raised position to the lowered position.

2. The portable roof clip mounting tool (66; 166; 566) according to claim 1, said fastening tool holder (68; 168) being coupled to the magazine guide (71) in a manner allowing the sled (86) to remain in retracted position when the fastening tool holder (68; 168) is moved from the lowered position to the raised position.

3. The portable roof clip mounting tool (66; 166; 566) according to claim 1 or 2, further comprising a folding actuator (735) configured for actuating a pivotal folding arm (723) of the strip-shaped roof mounting clip magazine (710), said pivotal folding arm (723) being adapted for folding, when a roof mounting clip (714) of said strip-shaped roof mounting clip magazine (710) has been fed to an attaching position, at least a portion (758a) of a free end (758) of the roof mounting clip about a roof seam edge (711) of a roof panel.

4. Use of a strip-shaped roof mounting clip magazine (10; 110; 210; 310; 710) for holding roof mounting clips (14; 314; 614; 714) with a portable roof clip mounting tool (66; 166; 566) according to any of the preceding claims, wherein the strip-shaped roof mounting clip magazine (10; 110; 210; 310; 710) is to be fed to a fastening tool (64; 164) of the portable roof clip mounting tool (66; 166; 566), the strip-shaped roof mounting clip magazine (10; 110; 210; 310; 710) comprising a plurality of clip holders (18; 318;418), distributed along said strip-shaped roof mounting clip magazine (10; 110; 219; 310; 710), for holding roof mounting clips (14) to be fastened onto a roof support structure (115) by said fastening tool (64; 164).

5. Use of a strip-shaped roof mounting clip magazine (10; 110; 210; 310; 710) according to claim 4, wherein the strip-shaped roof mounting clip magazine (10; 110; 210; 310; 710) further comprises a plurality of fasteners (12; 112), to be driven into said roof support structure (115) by said fastening tool (64; 164) to fasten said roof mounting clips (14; 314; 614; 714) to said roof support structure (115), said fasteners (12; 112) being releasibly attached to and distributed along said strip-shaped roof mounting clip magazine (10; 110; 210; 310; 710).

6. Use of strip-shaped roof mounting clip magazine (10; 110; 210; 310; 710) according to claim 4 or 5, wherein the strip-shaped roof mounting clip magazine (10; 110; 210; 310; 710) comprises a plurality of roof mounting clips (14; 314; 614; 714) to be fed to a fastening tool (64, 164) for fastening said roof mounting clips (14; 314) onto a roof support structure (115), the roof mounting clips (14; 314) being releasibly attached to and distributed along said strip-shaped roof mounting clip magazine (10; 110; 210; 310; 710).

7. Use of a strip-shaped roof mounting clip magazine according to claim 4, 5 or 6, wherein the strip-shaped roof mounting clip magazine (10; 110; 210; 310; 710) further comprises a plurality of fastener holders (16; 116), distributed along said strip-shaped roof mounting clip magazine (10; 110; 210; 310; 710), for holding fasteners (12; 112) to be driven into said roof support structure (115) by said fastening tool (64; 164) to fasten said roof mounting clips (14; 314; 614; 714) to said roof support structure (115).

8. Use of a strip-shaped roof mounting clip magazine (10; 110; 210; 310; 710) according to claim 7, each of said fastener holders (16; 116) being configured for guiding a fastener (12; 112) at two axially separated locations (30, 32).

9. Use of a strip-shaped roof mounting clip magazine (710)according to any of claims 4-8, wherein the strip-shaped roof mounting clip magazine (710) further comprises a plurality of folding arms (723), each of which is pivotally connected to a main body portion (721) of the strip-shaped roof mounting clip magazine and adapted to fold, when pivoted, at least a portion (758a) of a free end (758) of a respective roof mounting clip (714).

10. Use of a strip-shaped roof mounting clip magazine (710)according to any of claims 4-9, each of said clip holders (18; 318;418) being provided with a clip back support (717) for preventing the respective roof mounting clip (714) from pivoting in the strip-shaped roof mounting clip magazine (710) while being folded.

## Patentansprüche

1. Tragbares Dachklemmenmontierungswerkzeug (66; 166; 566) zum Anbringen von Dachmontierungsklemmen (14; 314; 614; 714) auf einer Dachstützstruktur (115), wobei das Dachklemmenmontierungswerkzeug (66; 166; 566) einen Magazinbeförderungsmechanismus (85) zum Zuführen eines streifenförmigen Dachmontierungsklemmenmagazins (10; 110; 210; 310; 710) zu einem Befestigungswerkzeug (64; 164) zum Eintreiben von Befestigungsmitteln (12; 112) in die Dachstützstruktur und eine Magazinführung (71) zum Führen des streifenförmigen Dachmontierungsklemmenmagazins zum Befestigungswerkzeug (64; 164) umfasst, wobei der Magazinbeförderungsmechanismus (85) einen Schlitten (86) umfasst, der entlang der Magazinführung (71) zwischen einer zurückgezogenen Position und einer vorgerückten Position bewegbar ist und zur vorgerückten Position vorgespannt ist, wobei der Schlitten (86) mit einer Nase (90) versehen ist, die dafür eingerichtet ist, mit dem streifenförmigen Dachmontierungsklemmenmagazin einzugreifen und dieses in eine Vorwärtsrichtung vorzurücken, wenn der Schlitten sich von der zurückgezogenen Position zur vorgerückten Position bewegt, und nicht-eingreifend das streifenförmige Dachmontierungsklemmenmagazin führt, wenn der Schlitten sich von der vorgerückten Position zur zurückgezogenen Position bewegt; wobei der Magazinbeförderungsmechanismus (85) weiter eine Befestigungswerkzeughalterung (68; 168) umfasst, wobei die Befestigungswerkzeughalterung (68; 168) im Verhältnis zur Magazinführung (71) entlang einer Befestigungswerkzeugführung (94; 194) zwischen einer angehobenen Position und einer abgesenkten Position hin- und herbewegbar ist, wobei die Befestigungswerkzeughalterung (68; 168) am Schlitten (86) gekoppelt ist, um den Schlitten von der vorgerückten Position zur zurückgezogenen Position zu bewegen, wenn die Befestigungswerkzeughalterung von der angehobenen Position zur abgesenkten Position bewegt wird.

2. Tragbares Dachklemmenmontierungswerkzeug (66; 166; 566) nach Anspruch 1, wobei die Befestigungswerkzeughalterung (68; 168) an der Magazinführung (71) so gekoppelt ist, dass der Schlitten (86) in der zurückgezogenen Position verbleiben kann, wenn die Befestigungswerkzeughalterung (68; 168) von der abgesenkten Position zur angehobenen Position bewegt wird.

3. Tragbares Dachklemmenmontierungswerkzeug (66; 166; 566) nach Anspruch 1 oder 2, weiter umfassend einen Faltaktuator (735), der dafür eingerichtet ist, einen drehbaren Faltarm (723) des streifenförmigen Dachmontierungsklemmenmagazins (710) zu betätigen, wobei der drehbare Faltarm (723), wenn eine Dachmontierungsklemme (714) des streifenförmigen Montierungsklemmenmagazins (710) zu einer Befestigungsposition zugeführt worden ist, zum Falten mindestens eines Teils (758a) eines freien Endes (758) der Dachmontierungsklemme um eine Dachnahtkante (711) einer Dachplatte herum ausgelegt ist.

4. Anwendung eines streifenförmigen Dachmontierungsklemmenmagazins (10; 110; 210; 310; 710) zum Halten von Dachmontierungsklemmen (14; 314; 614; 714) mit einem tragbaren Dachklemmenmontierungswerkzeug (66; 166; 566) nach einem der vorgehenden Ansprüche, wobei das streifenförmige Dachmontierungsklemmenmagazin (10; 110; 210; 310; 710) zu einem Befestigungswerkzeug (64; 164) des tragbaren Dachklemmenmontierungswerkzeugs (66; 166; 566) zugeführt werden soll, wobei das streifenförmige Dachmontierungsklemmenmagazin (10; 110; 210; 310; 710) eine Mehrheit von Klemmenhalterungen (18; 318;418) umfasst, die entlang des streifenförmigen Dachmontierungsklemmenmagazins (10; 110; 219; 310; 710) verteilt sind, zum Halten von Dachmontierungsklemmen (14), die durch das Befestigungswerkzeug (64; 164) auf einer Dachstützstruktur (115) befestigt werden sollen.

5. Anwendung eines streifenförmigen Dachmontierungsklemmenmagazins (10; 110; 210; 310; 710) nach Anspruch 4, wobei das streifenförmige Dachmontierungsklemmenmagazin (10; 110; 210; 310; 710) weiter eine Mehrheit von Befestigungsmitteln (12; 112) umfasst, die durch das Befestigungswerkzeug (64; 164) in die Dachstützstruktur (115) eingetrieben werden sollen, um die Dachmontierungsklemmen (14; 314; 614; 714) an der Dachstützstruktur (115) zu befestigen, wobei die Befestigungsmittel (12; 112) am streifenförmigen Dachmontierungsklemmenmagazin (10; 110; 210; 310; 710) lösbar befestigt sind und da entlang verteilt sind.

6. Anwendung eines streifenförmigen Dachmontierungsklemmenmagazins (10; 110; 210; 310; 710) nach Anspruch 4 oder 5, wobei das streifenförmige Dachmontierungsklemmenmagazin (10; 110; 210; 310; 710) eine Mehrheit von Dachmontierungsklemmen (14; 314; 614; 714) umfasst, die zu einem Befestigungswerkzeug (64; 164) zugeführt werden sollen zum Befestigen der Dachmontierungsklemmen (14; 314) auf einer Dachstützstruktur (115), wobei die Dachmontierungsklemmen (14; 314) am streifenförmigen Dachmontierungsklemmenmagazin (10; 110; 210; 310; 710) lösbar befestigt sind und da entlang verteilt sind.

7. Anwendung eines streifenförmigen Dachmontierungsklemmenmagazins nach Anspruch 4, 5 oder 6, wobei das streifenförmige Dachmontierungsklemmenmagazin (10; 110; 210; 310; 710) weiter eine Mehrheit von Befestigungshalterungen (16; 116) umfasst, die entlang des streifenförmigen Dachmontierungsklemmenmagazins (10; 110; 210; 310; 710) verteilt sind zum Halten von Befestigungsmitteln (12; 112), die durch das Befestigungswerkzeug (64; 164) in die Dachstützstruktur (115) eingetrieben werden sollen, um die Dachmontierungsklemmen (14; 314; 614; 714) an der Dachstützstruktur (115) zu befestigen.

8. Anwendung eines streifenförmigen Dachmontierungsklemmenmagazins (10; 110; 210; 310; 710) nach Anspruch 7, wobei jede Befestigungshalterung (16; 116) dafür eingerichtet sind, ein Befestigungsmittel (12; 112) an zwei axial getrennten Stellen (30, 32) zu führen.

9. Anwendung eines streifenförmigen Dachmontierungsklemmenmagazins (710) nach einem der Ansprüche 4-8, wobei das streifenförmige Dachmontierungsklemmenmagazin (710) weiter eine Mehrheit von Faltarmen (723) umfasst, die jeweils mit einem Hauptkörperteil (721) des streifenförmigen Dachmontierungsklemmenmagazins drehbar verbunden sind und dafür ausgelegt sind, wenn sie gedreht werden, mindestens einen Teil (758a) eines freien Endes (758) einer jeweiligen Dachmontierungsklemme (714) zu falten.

10. Anwendung eines streifenförmigen Dachmontierungsklemmenmagazins (710) nach einem der Ansprüche 4-9, wobei jede Klemmenhalterung (18; 318;418) mit einer Klemmenrückenunterstützung (717) versehen ist zum Verhindern, dass die jeweilige Dachmontierungsklemme (714) in das streifenförmige Dachmontierungsklemmenmagazin (710) dreht, während sie gefaltet wird.

## Revendications

1. Outil de montage de clip de toit portable (66; 166; 566) pour le montage de clips de montage de toit (14; 314; 614; 714) à une structure de support de toit (115), l'outil de montage de clip de toit (66; 166; 566) comprenant un mécanisme d'avance de magasin (85) pour amener un magasin de clips de montage de toit en forme de bande (10; 110; 210; 310; 710) à un outil de fixation (64; 164) pour enfoncer des attaches (12; 112) dans la structure de support de toit et un guide de magasin (71) pour guider ledit magasin de clips de montage de toit en forme de bande vers l'outil de fixation (64; 164), dans lequel le mécanisme d'avance de magasin (85) comprend un traîneau (86) mobile le long dudit guide de magasin (71) entre une position rétractée et une position avancée, et sollicité vers ladite position avancée, ledit traîneau (86) étant pourvu d'un butoir (90) configuré pour s'engager avec et faire avancer ledit magasin de clips de montage de toit en forme de bande vers l'avant lorsque le traîneau passe de la position rétractée à la position avancée, et pour faire passer sans engagement le magasin de clips de montage de toit en forme de bande lorsque le traîneau passe de la position avancée à la position rétractée ; dans lequel le mécanisme d'avance de magasin (85) comprend en outre un porte-outil de fixation (68; 168), ledit porte-outil de fixation (68; 168) pouvant aller en va-et-vient par rapport au guide de magasin (71) le long d'un guide d'outil de fixation (94; 194) entre une position relevée et une position abaissée, ledit porte-outil de fixation (68; 168) étant couplé au traîneau (86) de manière à déplacer le traîneau de la position avancée à la position rétractée lorsque le porte-outil de fixation est déplacé de la position relevée à la position rétractée position abaissée.

2. Outil de montage de clip de toit portable (66; 166; 566) selon la revendication 1, dans lequel ledit porte-outil de fixation (68; 168) est couplé au guide de magasin (71) d'une manière permettant au traîneau (86) de rester en position rétractée lorsque le porte-outil de fixation (68; 168) est déplacé de la position abaissée à la position relevée.

3. Outil de montage de clip de toit portable (66; 166; 566) selon la revendication 1 ou 2, comprenant en outre un actionneur de pliage (735) configuré pour actionner un bras de pliage pivotant (723) du magasin de clips de montage de toit en forme de bande (710), ledit bras de pliage (723) étant adapté pour le pliage, lorsqu'un clip de montage de toit (714) dudit magasin de clips de montage de toit en forme de bande (710) a été acheminé à une position de fixation, au moins une partie (758a) d'une extrémité libre (758) dudit clip de montage de toit autour d'un bord de joint de toit (711) d'un panneau de toit.

4. Utilisation d'un magasin de clips de montage de toit en forme de bande (10; 110; 210; 310; 710) pour porter des clips de montage de toit (14; 314; 614; 714) avec un outil de montage de clip de toit portable (66; 166; 566) selon l'une quelconque des revendications précédentes, le magasin de clips de montage de toit en forme de bande (10; 110; 210; 310; 710) devant être acheminés vers un outil de fixation (64; 164) de l'outil de montage de clip de toit portable (66; 166; 566), le magasin de clips de montage de toit en forme de bande (10; 110; 210; 310; 710) comprenant une pluralité de supports de clips (18; 318;418), répartis le long dudit magasin de clips de montage de toit en forme de bande (10; 110; 219; 310; 710), pour porter les clips de montage de toit (14) à fixer sur une structure de support de toit (115) par ledit outil de fixation (64; 164).

5. Utilisation d'un magasin de clips de montage de toit en forme de bande (10; 110; 210; 310; 710) selon la revendication 4, dans laquelle le magasin de clips de montage de toit en forme de bande (10; 110; 210; 310; 710) comprenant une pluralité de fixations (12; 112), à enfoncer dans ladite structure de support de toit (115) par ledit outil de fixation (64; 164) pour fixer lesdits clips de montage de toit (14; 314; 614; 714) à ladite structure de support de toit (115), lesdites fixations (12; 112) étant attachées de manière détachable au magasin de clips de montage de toit en forme de bande (10; 110; 210; 310; 710) et reparties le long de celui-ci.

6. Utilisation d'un magasin de clips de montage de toit en forme de bande (10; 110; 210; 310; 710) selon la revendication 4 ou 5, dans laquelle le magasin de clips de montage de toit en forme de bande (10; 110; 210; 310; 710) comprend une pluralité de clips de montage de toit (14; 314; 614; 714) devant être acheminés vers un outil de fixation (64, 164) pour fixer les clips de montage de toit (14; 314) sur la structure de support de toit (115), les clips de montage de toit (14; 314) étant attachées de manière détachable au magasin de clips de montage de toit en forme de bande (10; 110; 210; 310; 710) et reparties le long de celui-ci.

7. Utilisation d'un magasin de clips de montage de toit en forme de bande selon la revendication 4, 5 ou 6, dans laquelle le magasin de clips de montage de toit en forme de bande (10; 110; 210; 310; 710) comprend une pluralité de supports d'attaches (16; 116), repartis le long du magasin de clips de montage de toit en forme de bande (10; 110; 210; 310; 710), pour retenir des attaches (12; 112) à enfoncer dans la structure de support de toit (115) par ledit outil de fixation (64; 164) pour fixer des clips de montage de toit (14; 314; 614; 714) à ladite structure de support de toit (115).

8. Utilisation d'un magasin de clips de montage de toit en forme de bande (10; 110; 210; 310; 710) selon la revendication 7, dans laquelle chacune des supports d'attaches (16; 116) sont configurées pour guider une attache (12; 112) en deux emplacements séparés axialement (30, 32).

9. Utilisation d'un magasin de clips de montage de toit en forme de bande (710) selon l'une quelconque des revendications 4 à 8, dans lequel le magasin de clips de montage de toit en forme de bande (710) comprend en outre une pluralité de bras pliants (723), dont chacun est relié de manière pivotante à une partie de corps principal (721) du magasin de clips de montage de toit en forme de bande et adapté pour plier, lors du pivotement, au moins une partie (758a) d'une extrémité libre (758) d'un clip de montage de toit respectif (714).

10. Utilisation d'un magasin de clips de montage de toit en forme de bande (710) selon l'une quelconque des revendications 4 à 9, dans lequel chacun desdits supports de clip (18; 318;418) est pourvu d'un support arrière de clip (717) pour empêcher le clip de montage de toit respectif (714) de pivoter dans le magasin de clips de montage de toit en forme de bande (710) tout en étant plié.
